# EUROPEAN PATENT SPECIFICATION

(11) **EP 2 889 514 B1**
(45) Date of publication and mention of the grant of the patent: **01.08.2018**
(21) Application number: 14162210.0
(22) Date of filing: 28.03.2014
(51) Int. Cl.: F16H 61/423, F16H 61/433, F03D 9/00, F03D 7/02

(54) **Hydraulic transmission, power generating apparatus of renewable energy type and operation method thereof**
Hydraulikgetriebe, Vorrichtung zur Stromerzeugung aus erneuerbarer Energie und Betriebsverfahren dafür
Transmission hydraulique, appareil de génération d'énergie de type renouvelable et procédé de fonctionnement associé

(30) Priority: 27.12.2013 JP 2013272839
(43) Date of publication of application: 01.07.2015
(73) Proprietor: MITSUBISHI HEAVY INDUSTRIES, LTD., Tokyo 108-8215 (JP)
(72) Inventor: Iwasaki, Satoshi, TOKYO, 108-8215 (JP); Koyanagi, Takuya, TOKYO, 108-8215 (JP); Yuge, Atsushi, TOKYO, 108-8215 (JP); Hayashi, Toshikazu, TOKYO, 108-8215 (JP); Ichinose, Hidekazu, TOKYO, 108-8215 (JP); Egashira, Yusaku, TOKYO, 108-8215 (JP)
(74) Representative: Intès, Didier Gérard André

(56) References cited:
- WO-A1-2013/114437
- GB-A- 2 485 987
- US-A- 4 766 779
- US-A1- 2003 168 862
- US-A1- 2010 032 959

## Description

### [Technical Field]

The present invention relates to a hydraulic transmission combining a hydraulic pump and a hydraulic motor, a power generating apparatus provided with the hydraulic transmission and an operation method thereof.

### [Background Art]

A hydraulic transmission provided with a hydraulic pump and a hydraulic motor has been known. A typical hydraulic transmission is configured such that mechanical rotational energy of a rotation shaft (an input shaft) is converted into fluid energy of operating oil by a hydraulic pump and the fluid energy of the operating oil is converted into mechanical rotational energy of the rotation shaft (an output shaft) by a hydraulic motor.

For example, Patent Reference 1 discloses a wind turbine generator using a hydraulic transmission constituted of a hydraulic pump driven by rotation of the rotor, a hydraulic motor connected to a generator, and an operating oil passage provided between the hydraulic pump and the hydraulic motor. In this hydraulic transmission, the hydraulic pump includes a plurality of pistons, a plurality of cylinders, a cam for reciprocating the pistons in the cylinders cyclically, and a high pressure valve and a low pressure valve that open and close in synchronization with the reciprocating timing of the pistons. Further, by latching the piston near a top dead center, a working chamber surrounded by the cylinder and the piston is put into a non-active state so as to change displacement volume of the hydraulic pump.

Another wind turbine generator using a hydraulic transmission is disclosed in Patent Reference 2. This hydraulic transmission is configured by a combination of a hydraulic pump of fixed displacement type having fixed displacement volume and a hydraulic motor of variable displacement type having adjustable displacement volume to control the output.
WO2013/114437 discloses a hydraulic transmission according to the preamble of claim 1 and constitutes the closest prior art for independent claims 9 and 10.

### [Citation List]

### [Patent Reference]

[Patent Reference 1]
   US 2010/0032959
[Patent Reference 2]
   WO 2007/053036

### [Summary of Invention]

### [Technical Problem]

In the case of the hydraulic pump of variable displacement type as described in Patent Reference 1, an active valve equipped with an actuator needs to be provided to change the working chamber of the hydraulic pump between an active state and a non-active state. The hydraulic pump normally has a large number of working chambers and thus, actuators corresponding to the working chambers need to be installed, which results in cost increase. In contrast, in the case of the hydraulic pump of fixed displacement type as described in Patent Reference 2, although cost reduction is achieved, torque control cannot be performed by the hydraulic pump and thus, freedom of control of the hydraulic transmission decreases.

In view of the above issues, it is an object of at least one embodiment of the present invention to provide a hydraulic transmission combining a hydraulic pump and a hydraulic motor, a power generating apparatus provided with the hydraulic transmission and an operation method thereof, whereby cost reduction can be realized while securing freedom of control.

### [Solution to Problem]

A hydraulic transmission according to at least one embodiment of the present invention is disclosed in claim 1, and comprises:
a hydraulic pump of variable displacement type configured to be driven by mechanical energy input to a rotation shaft; and
a hydraulic motor of variable displacement type configured to be driven by pressure oil from the hydraulic pump,
displacement D_{P} of the hydraulic pump is variable within a range from D_{Pmin} to D_{Pmax} (D_{Pmin}>0), and
displacement D_{M} of the hydraulic motor is variable within a range from 0 to D_{Mmax}.

Specifically, in this embodiment, the hydraulic pump is configured such that displacement D_{P} of the hydraulic pump is variable within a range from D_{Pmin} to D_{Pmax}, where D_{Pmin} is a minimum value and D_{Pmax} is a maximum value of the displacement D_{P},
the hydraulic motor is configured such that displacement DM of the hydraulic motor is variable within a range from D_{Mmin} to D_{Mmax}, where D_{Mmin} is a minimum value and D_{Mmax} is a maximum value of the displacement D_{M},
the minimum value D_{Pmin} which is a lower limit of the variable range for the displacement of the hydraulic pump is greater than zero, and
the minimum value D_{Mmin} which is a lower limit of the variable range for the displacement of the hydraulic motor is equal to zero.

With this hydraulic transmission, it is possible to reduce device cost while securing freedom of controlling the hydraulic transmission.

Specifically, as the displacement D_{M} of the hydraulic motor is variable within a range from 0 to D_{Mmax}, the output of the hydraulic transmission (hydraulic motor output) can be arbitrarily adjusted in a range not greater than its rated output. Further, as the displacement D_{P} of the hydraulic pump is variable within a range from D_{Pmin} to D_{Pmax}, compared to a fixed displacement hydraulic pump, the displacement of the hydraulic pump is variable in addition to the displacement of the hydraulic motor in a high load region (including rated load) of the hydraulic transmission, whereby the freedom of controlling the hydraulic transmission is secured. Further, as the displacement of the hydraulic pump D_{P} is in part variable, comparison to a fixed displacement hydraulic pump, the minimum discharge amount from the hydraulic pump can be reduced. Thus, it is possible to reduce capacity of those devices for restricting an amount of oil flowing into the hydraulic motor from the hydraulic pump (for instance, a relief valve or the like that is provided in a bypass line between a high pressure oil line and a low pressure oil line). Further, compared to a hydraulic pump whose displacement is variable in the entire range, it is possible to reduce the number of parts for controlling the displacement of the hydraulic pump (for instance, a passive control valve). As a result, it is possible to reduce the device cost of the hydraulic transmission.

The hydraulic transmission according to some embodiments further comprises:
a line provided between a discharge port of the hydraulic pump and an inlet port of the hydraulic motor to direct the pressure oil from the hydraulic pump to the hydraulic motor;
a low pressure oil line provided between a discharge port of the hydraulic motor and an inlet port of the hydraulic pump to direct operating oil from the hydraulic motor to the hydraulic pump, the said operating oil having pressure lower than the said pressure oil;
a bypass line connecting the high pressure oil line and the low pressure oil line;
a bypass valve provided in the bypass line; and
a bypass valve control part configured to control the bypass valve so as to adjust a pressure of the pressure oil in the high pressure oil line,
the bypass valve control part is configured to control the pressure of the pressure oil in the high pressure oil line in accordance with a prescribed correlation between a rotation speed of the hydraulic pump and torque of the hydraulic pump so as to adjust the torque of the hydraulic pump to a target value according to the rotation speed of the hydraulic pump in a range of less than threshold torque Tₜₕ of the hydraulic pump that is determined by at least the minimum value D_{Pmin} of the displacement D_{P} and a minimum value of the pressure in the high pressure oil line when the bypass valve is fully closed.

In this embodiment, the bypass valve is provided in the bypass line connecting the high pressure oil line and the low pressure oil line, and the pressure of the high pressure line is adjusted by a bypass valve control performed by the bypass valve control part. Thus, it is possible to achieve torque control of the hydraulic pump using the pressure of the high pressure oil line. Therefore, the pressure of the pressure oil in the high pressure oil line is controlled in accordance with a prescribed correlation between a rotation speed of the hydraulic pump and torque of the hydraulic pump so as to adjust the torque of the hydraulic pump to a target value according to the rotation speed of the hydraulic pump in a range of less than threshold torque Tth of the hydraulic pump where the torque control through displacement adjustment of the hydraulic pump is difficult. As a result, it is possible to make the torque of the hydraulic pump to an appropriate value even at low load of the hydraulic pump.

The hydraulic transmission according to one embodiment further comprises:
a pump control part configured to control the hydraulic pump to adjust the displacement D_{P} of the hydraulic pump, and
the pump control part is configured to control the displacement D_{P} of hydraulic pump within the range from D_{Pmin} to D_{Pmax} so as to adjust the torque of the hydraulic pump to the target value according to the rotation speed of the hydraulic pump in accordance with the prescribed correlation between the rotation speed of the hydraulic pump and the torque of the hydraulic pump, in a range of not less than the threshold torque Tₜₕ.

As the displacement D_{P} of hydraulic pump is controlled within the range from D_{Pmin} to D_{Pmax} at high load of the hydraulic pump (not less than the threshold torque Tth), it is possible to adjust the torque of the hydraulic pump to the target value according to the rotation speed of the hydraulic pump in accordance with the prescribed correlation between the rotation speed of the hydraulic pump and the torque of the hydraulic pump.

In some embodiments, the hydraulic pump comprises:
a plurality of pistons;
a plurality of cylinders configured to guide the plurality of pistons reciprocably and form a plurality of working chambers with the plurality of pistons, respectively;
at least one set of a first high pressure valve and a first low pressure valve provided for at least one first working chamber belonging to a first group among the plurality of working chambers; and
at least one set of a second high pressure valve and a second low pressure valve provided for at least one second working chamber belonging to a second group among the plurality of working chambers, the second group being different from the first group,
at least one of the first high pressure valve or the first low pressure valve is constituted by a valve whose opening and closing is actively controllable so as to change an operation state of the at least one first working chamber between an active state where there is displacement volume and a non-active state where there is no displacement volume,
each of the second high pressure valve and the second low pressure valve are constituted by a valve whose opening and closing is passively controllable so as to restrict the at least one second working chamber to an active state where there is displacement volume, and
the minimum value D_{Pmin} of the variable range for the displacement of the hydraulic pump is determined in accordance with the number and volume of the second working chambers.

As described above, at least one of the first high pressure valve or the first low pressure valve provided in the first working chamber belonging to the first group is constituted by a valve whose opening and closing is actively controllable so as to change an operation state of the first working chamber between an active state where there is displacement volume and a non-active state where there is no displacement volume. With this configuration, the displacement is variable by means of the first working chamber. Further, as compared to a fixed displacement hydraulic pump, the freedom of controlling the hydraulic transmission can be secured and the capacity of the devices within the hydraulic transmission (e.g. a relief valve and the like) can be reduced.

In some embodiments, the minimum value D_{Pmin} of the displacement Dp of the hydraulic pump is not less than 0.25×D_{Pmax} and not greater than 0.75×D_{Pmax}.

As a result, it is possible to secure the freedom of controlling the hydraulic transmission and also reduce the device cost.

The hydraulic transmission according to some embodiments further comprises:
a high pressure oil line provided between a discharge port of the hydraulic pump and an inlet port of the hydraulic motor to direct the pressure oil from the hydraulic pump to the hydraulic motor;
a low pressure oil line provided between a discharge port of the hydraulic motor and an inlet port of the hydraulic pump to direct operating oil from the hydraulic motor to the hydraulic pump, the said operating oil having pressure lower than the said pressure oil;
a bypass line connecting the high pressure oil line and the low pressure oil line;
a bypass valve provided in the bypass line to control a flow of the pressure oil flowing in the bypass line from the high pressure oil line toward the low pressure oil line; and
a bypass valve control part configured to control the bypass valve so as to adjust a pressure of the pressure oil in the high pressure oil line, and
the bypass valve control part is configured to control the bypass valve to a full open position at least when the hydraulic pump is started from a standby state in starting of the hydraulic transmission.

In this embodiment, the displacement D_{P} of hydraulic pump is variable within the range from D_{Pmin} to D_{Pmax} (D_{Pmin}>0). Thus, load torque is generated even when the input energy to the hydraulic transmission is small during starting of the hydraulic transmission. Therefore, the bypass valve is controlled to a full open position at least when the hydraulic pump is started from a standby state during starting of the hydraulic transmission. As a result, it is possible to make the load torque of the hydraulic transmission close to zero and this facilitates starting of the hydraulic pump.

In one embodiment, the bypass control part is configured to control the bypass valve after rotation of the hydraulic pump is started in the starting of the hydraulic transmission so that the pressure in the high pressure oil line reaches a pressure at which an initial torque required to start rotation of the hydraulic motor from a standby state is achieved.

As a result, even when the initial torque is required to start the hydraulic motor, the required initial torque can be secured by adjusting the pressure in the high pressure oil line by controlling the bypass valve. Thus, the hydraulic motor can be started smoothly.

A power generating apparatus of renewable energy type according to at lest one embodiment of the present invention comprises:
at least one blade;
a rotation shaft configured to be rotated by renewable energy received by the at least one blade;
a hydraulic pump of variable displacement type configured to be driven by the rotation shaft;
a hydraulic motor of variable displacement type configured to be driven by pressure oil from the hydraulic pump; and
a generator configured to be driven by the hydraulic motor,
displacement D_{P} of the hydraulic pump is variable within a range from D_{Pmin} to D_{Pmax} (D_{Pmin}>0), and
displacement DM of the hydraulic motor is variable within a range from zero to D_{Mmax}, where DMmin is a minimum value and D_{Mmax} is a maximum value of the displacement D_{M}.

Specifically, in this embodiment, the hydraulic pump is configured such that displacement D_{P} of the hydraulic pump is variable within a range from D_{Pmin} to D_{Pmax}, where D_{Pmin} is a minimum value and D_{Pmax} is a maximum value of the displacement D_{P},
the hydraulic motor is configured such that displacement D_{M} of the hydraulic motor is variable within a range from D_{Mmin} to D_{Mmax}, where D_{Mmin} is a minimum value and D_{Mmax} is a maximum value of the displacement DM,
the minimum value D_{Pmin} which is a lower limit of the variable range for the displacement of the hydraulic pump is greater than zero, and
the minimum value D_{Mmin} which is a lower limit of the variable range for the displacement of the hydraulic motor is equal to zero.

According to the above power generating apparatus of renewable energy type, as the displacement DM of the hydraulic motor is variable within a range from 0 to D_{Mmax}, the output of the hydraulic transmission (hydraulic motor output) can be arbitrarily adjusted in a range not greater than its rated output. Further, as the displacement D_{P} of the hydraulic pump is variable within a range from D_{Pmin} to D_{Pmax}, compared to a fixed displacement hydraulic pump, the displacement of the hydraulic pump can be adjusted in a high load region (including rated load) of the hydraulic transmission, whereby the freedom of controlling the hydraulic transmission is secured. Further, as the displacement of the hydraulic pump D_{P} is in part variable, comparison to a fixed displacement hydraulic pump, the minimum discharge amount from the hydraulic pump can be reduced, and capacity of devices inside the hydraulic transmission can be reduced. Furthermore, compared to a hydraulic pump whose displacement is variable in the entire range, it is possible to reduce the number of parts for controlling the displacement of the hydraulic pump (for instance, a passive control valve). As a result, it is possible to reduce the device cost of the hydraulic transmission.

The power generating apparatus of renewable energy type according to one embodiment is a wind turbine generator which is configured so that electric power is generated by the generator using wind power energy that the at least one blade receives from wind in a form of renewable energy.

With the wind turbine generator equipped with the above hydraulic transmission, it is possible to reduce the device cost and also possible to generate electric power efficiently using wind power.

An operation method according to one embodiment of the present invention is for a hydraulic transmission which comprises a hydraulic pump of variable displacement type having displacement D_{P} that is variable within a first variable range and configured to be driven by mechanical energy input to a rotation shaft, a hydraulic motor of variable displacement type having displacement D_{M} that is variable within a second variable range and configured to be driven by pressure oil from the hydraulic pump, a high pressure oil line provided between a discharge port of the hydraulic pump and an inlet port of the hydraulic motor, a low pressure oil line provided between a discharge port of the hydraulic motor and an inlet port of the hydraulic pump, a bypass line connecting the high pressure oil line and the low pressure oil line, and a bypass valve provided in the bypass line, and
the first variable range of the hydraulic pump is not less than D_{Pmin} and not greater than D_{Pmax} where D_{Pmin} is a minimum value and D_{Pmax} is a maximum value of the displacement D_{P}, and the minimum value D_{Pmin} being a lower limit of the first variable range is greater than zero,
the second variable range of the hydraulic motor is not less than D_{Mmin} and not greater than D_{Mmax} where D_{Mmin} is a minimum value and D_{Mmax} is a maximum value of the displacement D_{M}, and the minimum value D_{Mmin} being a lower limit of the second variable range is equal to zero, and
the operation method comprises the step of: controlling, in accordance with a prescribed correlation between a rotation speed of the hydraulic pump and torque of the hydraulic pump, a pressure of the pressure oil in the high pressure oil line so as to adjust the torque of the hydraulic pump to a target value according to the rotation speed of the hydraulic pump in a range of less than threshold torque Tₜₕ of the hydraulic pump that is determined by at least the minimum value D_{Pmin} of the displacement D_{P} and a minimum value of the pressure in the high pressure oil line when the bypass valve is fully closed.

According to the above operation method for the hydraulic transmission, the displacement D_{P} of the hydraulic pump is variable in the range not less than D_{Pmin} and not greater than D_{Pmax} (D_{Pmin}>0). Thus, while arbitrarily adjusting the output of the hydraulic transmission in the range not greater than its rated output, it is possible to reduce the number of active control valves of the hydraulic pump, compared to the case where the control valves are provided for all the cylinders of the hydraulic pump. As a result, it is possible to achieve reduction of the device cost. Further, with the reduced number of active control valves of the hydraulic pump, the minimum discharge amount from the hydraulic pump can be reduced. As a result, it is possible to reduce capacity of devices for restricting an amount of oil flowing into the hydraulic motor from the hydraulic pump.

An operation method according to at least one embodiment of the present invention is for a power generating apparatus of renewable energy type which comprises at least one blade, a rotation shaft configured to be rotated by renewable energy received by the at least one blade, a hydraulic pump of variable displacement type having displacement D_{P} that is variable within a first variable range and configured to be driven by mechanical energy input to the rotation shaft, a hydraulic motor of variable displacement type having displacement D_{M} that is variable within a second variable range and configured to be driven by pressure oil from the hydraulic pump, a high pressure oil line provided between a discharge port of the hydraulic pump and an inlet port of the hydraulic motor, a low pressure oil line provided between a discharge port of the hydraulic motor and an inlet port of the hydraulic pump, a bypass line connecting the high pressure oil line and the low pressure oil line, and a bypass valve provided in the bypass line, and
the first variable range of the hydraulic pump is not less than D_{Pmin} and not greater than D_{Pmax} where D_{Pmin} is a minimum value and D_{Pmax} is a maximum value of the displacement D_{P}, and the minimum value D_{Pmin} being a lower limit of the first variable range is greater than zero,
the second variable range of the hydraulic motor is not less than D_{Mmin} and not greater than D_{Mmax} where D_{Mmin} is a minimum value and D_{Mmax} is a maximum value of the displacement D_{M}, and the minimum value D_{Mmin} being a lower limit of the second variable range is equal to zero, and
the operation method comprises the step of: controlling, in accordance with a prescribed correlation between a rotation speed of the hydraulic pump and torque of the hydraulic pump, a pressure of the pressure oil in the high pressure oil line so as to adjust the torque of the hydraulic pump to a target value according to the rotation speed of the hydraulic pump in a range of less than threshold torque Tₜₕ of the hydraulic pump that is determined by at least the minimum value D_{Pmin} of the displacement D_{P} and a minimum value of the pressure in the high pressure oil line when the bypass valve is fully closed.

According to the above operation method for the power generating apparatus of renewable energy type, the hydraulic transmission is configured so that the displacement D_{P} of the hydraulic pump is variable in the range not less than D_{Pmin} and not greater than D_{Pmax} (D_{Pmin}>0). Thus, while arbitrarily adjusting the output of the hydraulic transmission in the range not greater than its rated output, it is possible to reduce the number of active control valves of the hydraulic pump, compared to the case where the control valves are provided for all the cylinders of the hydraulic pump. As a result, it is possible to achieve reduction of the device cost. Further, with the reduced number of active control valves of the hydraulic pump, the minimum discharge amount from the hydraulic pump can be reduced. As a result, it is possible to reduce capacity of devices for restricting an amount of oil flowing into the hydraulic motor from the hydraulic pump.

### [Advantageous Effects of Invention]

According to at least one embodiment of the present invention, it is possible to reduce the number of active control valves for the hydraulic pump compared to being provided in each of the cylinder of the hydraulic pump, and thus, it is possible to achieve reduction of the device cost. Further, with the reduced number of the active control valves for the hydraulic pump, it is possible to reduce the minimum discharge amount from the hydraulic pump and thus, it is possible to reduce capacity of devices for restricting the amount of oil flowing into the hydraulic motor from the hydraulic pump.

### [Brief Description of Drawings]

[FIG.1] FIG.1 is an illustration of an overall configuration of a wind turbine generator provided with a hydraulic transmission according to one embodiment.
[FIG.2] FIG.2 is an example of a concrete configuration of a hydraulic pump.
[FIG.3] FIG.3 is an example of a concrete configuration of a hydraulic motor.
[FIG.4] FIG.4 is an illustration of an optimal operation curve (τ-ω curve) and a control curve of a comparative example.
[FIG.5] FIG.5 is an illustration of an optimal operation curve (τ-ω curve) and a control curve of the present embodiment.
[FIG.6] FIG.6 is a flow chart illustrating an operation method for a wind turbine generator 1 according to one embodiment.
[FIG.7] FIG.7 shows a simulation result of each parameter in the wind turbine generator 1 when the wind speed is constant at a rated wind speed.
[FIG.8] FIG.8 shows a simulation result of each parameter in a wind turbine generator in the case where the wind speed gradually increases from a low wind speed below the rated wind speed toward the rated wind speed.

### [Description of Embodiments]

Preferred embodiments of the present invention will now be described in detail with reference to the accompanying drawings. It is intended, however, that unless particularly specified, dimensions, materials, shape, its relative positions and the like shall be interpreted as illustrative only and not limitative of the scope of the present invention.

The following embodiments illustrate and describe a wind turbine generator which is a power generating apparatus of renewable energy type, as an object to which a hydraulic transmission is applied. However, the present invention is also applicable to other power generating apparatuses of renewable energy type, such as a current power generator, an ocean current power generator, and a river current power generator.

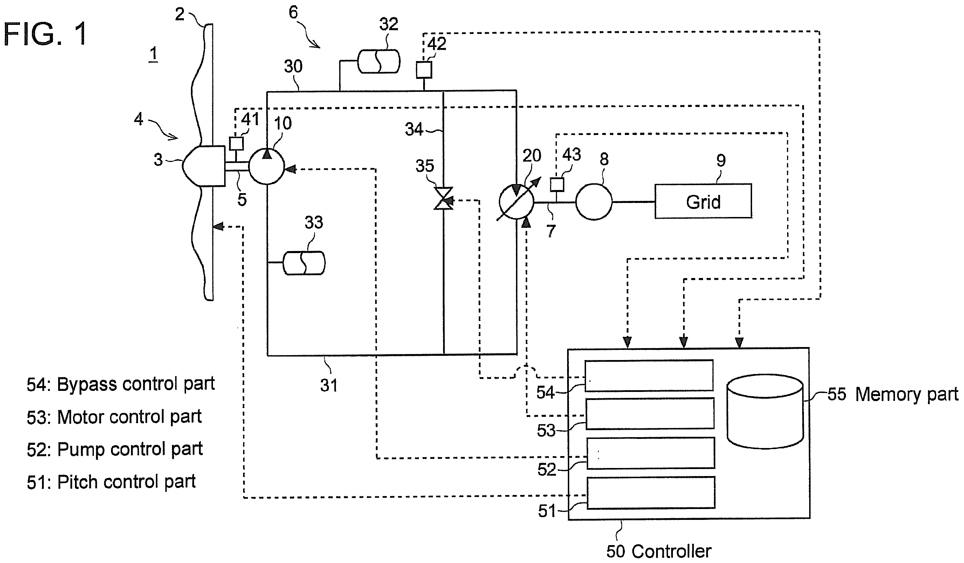

FIG.1 is an illustration of an overall configuration of a wind turbine generator provided with a hydraulic transmission according to one embodiment. As shown in the drawing, a wind turbine generator 1 comprises a rotor 4 including a blade 2 and a hub 3, a rotation shaft 5 configured to rotate with the rotor 4, a hydraulic transmission 6 configured to increase rotation speed of the rotor 4, and a generator 8 to which the rotational energy of the rotor 4 is input via the hydraulic transmission 6.

The rotor 4 is configured such that at least one blade 2 is mounted to the hub 3, and when the blade 2 receives wind, this blade 2 rotates with the hub 3. The rotation shaft 5 is connected with the hub 3. Further, a force of the wind which the blade 2 received rotates the entire Rotor 4, and the rotation is inputted into the hydraulic transmission 6 through the rotation shaft 5. An actuator (not shown) is attached to the blade 2, and this actuator operates under control of a pitch control part 51 so as to change a pitch angle of the blade 2.

The hydraulic transmission 6 includes a hydraulic pump 10 of variable displacement type, a hydraulic motor 20 of variable displacement type, and a high pressure oil line 30 and a low pressure oil line 31.

The hydraulic pump 10 is configured to be driven by mechanical rotation energy which is inputted to the rotation shaft 5. The generator 8 connected to a grid system 9 is coupled to an output shaft 7 of the hydraulic motor 20.

The high pressure oil line 30 is provided between a discharge port of the hydraulic pump 10 and an inlet port of the hydraulic motor 20 to direct the pressure oil (high pressure oil) from the hydraulic pump 10 to the hydraulic motor 20.

The low pressure oil line 31 is provided between a discharge port of the hydraulic motor 20 and an inlet port of the hydraulic pump 10 to direct pressure oil (low pressure oil) discharged from the hydraulic motor 20 to the hydraulic pump 10.

In the above-mentioned hydraulic transmission 6, high pressure oil generated by the hydraulic pump 10 flows into the hydraulic motor 20 through the high pressure oil line 30, and drives the hydraulic motor 20. The low pressure oil having performed work in the high pressure motor 20 flows into the hydraulic pump 10 through the low pressure oil line 31 and is pressurized in the hydraulic pump 10. Then, the pressurized oil flows into the hydraulic motor 20 through the high pressure oil line 30 again. The generator 8 connected to the grid system 9 is connected to the output shaft 7 of the hydraulic motor 20. The rotation inputted to the hydraulic pump 10 of the hydraulic transmission 6 is increased in speed by the hydraulic transmission 6, and then is inputted into the generator 8.

FIG.1 illustrated the hydraulic transmission 6 having only one hydraulic motor 20. This is, however, not restrictive, and a plurality of hydraulic motors 20 may be provided and be connected to the hydraulic pump 10. In the case where a plurality of hydraulic motors 20 is provided, one generator 8 may be provided for each of the hydraulic motors 20, or one generator 8 may be provided for two or more hydraulic motors 20 sharing an output shaft 7. Moreover, the generator 8 may be a synchronous generator arranged on the same axis as the hydraulic motor 20.

Here, the detailed configuration of the hydraulic pump 10 and the hydraulic motor 20 is explained.

In some embodiments, the hydraulic pump 10 and the hydraulic motor 20 have the following configuration.

The displacement of the hydraulic pump 10 is variable within a range from D_{Pmin} to D_{Pmax} (D_{Pmin}>0). Specifically, the displacement D_{P} of the hydraulic pump 10 is variable in a first variable range which is not less than D_{Pmin} and not greater than D_{Pmax} where D_{Pmin} is a minimum value and D_{Pmax} is a maximum value of the displacement D_{P}. Further, the minimum value D_{Pmin} is a lower limit of the first variable range and is greater than zero.

As the displacement D_{P} of the hydraulic pump 10 is variable within the range from D_{Pmin} to D_{Pmax}, compared to a fixed displacement hydraulic pump, not only the displacement of the hydraulic motor 20 but also the displacement of the hydraulic pump 10 can be adjusted in a high load region (including rated load) of the hydraulic transmission 6, whereby the freedom of controlling the hydraulic transmission 6 is secured. Further, as the displacement D_{P} of the hydraulic pump 10 is in part variable, comparison to a fixed displacement hydraulic pump, the minimum discharge amount from the hydraulic pump 10 can be reduced. Thus, it is possible to reduce capacity of those devices for restricting an amount of oil flowing into the hydraulic motor 20 from the hydraulic pump 10 (for instance, a relief valve or the like that is provided in a bypass line 34 between the high pressure oil line 30 and a low pressure oil line 31). Further, compared to a hydraulic pump whose displacement is variable in the entire range, it is possible to reduce the number of parts for controlling the displacement D_{P} of the hydraulic pump 10 (for instance, a passive control valve). As a result, it is possible to reduce the device cost of the hydraulic transmission 6.

Moreover, as the displacement D_{M} of the hydraulic motor 20 is variable within a range from 0 to D_{Mmax}, the output of the hydraulic transmission 6 (hydraulic motor output) can be arbitrarily adjusted in a range not greater than its rated output. Specifically, the displacement D_{M} of the hydraulic motor 20 is variable in a second variable range which is not less than D_{Mmin} and not greater than D_{Mmax} where D_{Mmin} is a minimum value and D_{Mmax} is a maximum value of the displacement D_{M}. The minimum value D_{Mmin} is a lower limit of the second variable range and is equal to zero.

With this hydraulic transmission including the above hydraulic pump 10 and the above hydraulic motor 20, it is possible to reduce device cost while securing freedom of controlling the hydraulic transmission 6.

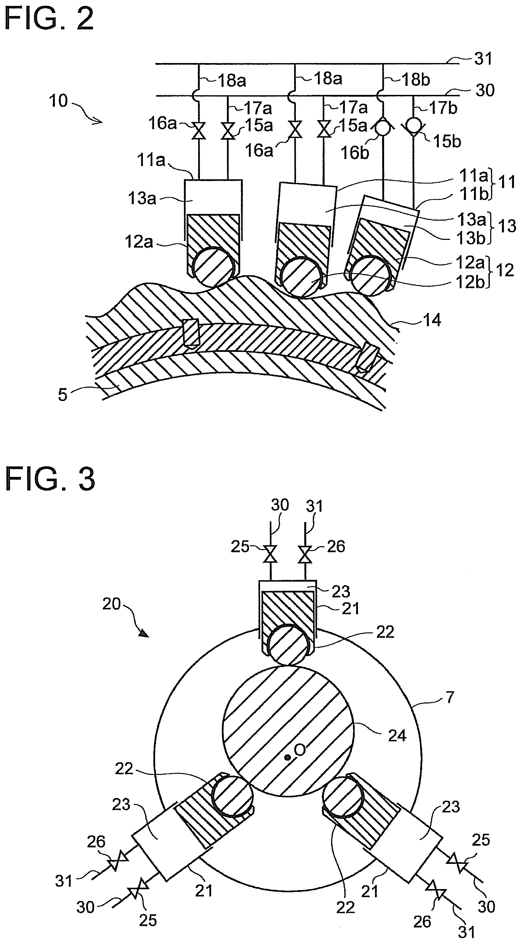

Hereafter, a concrete configuration example of each of the hydraulic pump 10 and the hydraulic motor 20 according to one embodiment is explained. FIG.2 is a view showing a concrete configuration of the hydraulic pump, whereas FIG.3 is a view showing a concrete configuration of the hydraulic motor.

In one embodiment, the hydraulic pump 10 shown in FIG.2 comprises a plurality of pistons 11, a plurality of cylinders 12 configured to guide the plurality of pistons reciprocably and form a plurality of working chambers with the plurality of pistons 11, respectively, and a cam 14 having a cam profile engageable with the plurality of pistons 11.

The plurality of pistons 11 includes at least one first piston 11a and at least one second piston 11b. The plurality of cylinders 12 includes at least one first cylinder 12a corresponding to the at least one first piston 11a, and at least one second cylinder 12a corresponding to the at least one second piston 11a. A first working chamber 13a is formed by the first piston 11a and the first cylinder 12a, and a second working chamber 13b is formed by the second piston 11b and the second cylinder 12b. Thus, a plurality of working chambers 13 (13a, 13b) are formed in the hydraulic pump 10.

A first high pressure valve 15a is provided in a first high pressure communication path 17a disposed between the high pressure oil line 30 and the at least one first working chamber 13a belonging to a first group among the plurality of working chambers 13, and a first low pressure valve 16a is provided in a first low pressure communication path 18a disposed between the low pressure oil line 31 and the at least one first working chamber 13a. At least one of the first high pressure valve 15a or the first low pressure valve 16a is constituted by a valve whose opening and closing is actively controllable so as to change an operation state of the first working chamber 13a between an active state where there is displacement volume and a non-active state where there is no displacement volume.

In one embodiment, the first high pressure valve 15a is constituted by a valve whose opening and closing is passively controlled, whereas the first low pressure valve 16a is constituted by an electromagnetic valve whose opening and closing is actively controlled. For instance, the first high pressure valve 15a is a check valve configured to allow only a flow of pressure oil flowing from the first working chamber 13a to the high pressure oil line 30, and the first low pressure valve 16a is an electromagnetic valve (normally-open solenoid closed valve) configured to close when a solenoid is energized and open when the solenoid is de-energized. In this case, the first high pressure valve 15a is opened when the pressure of the first working chamber 13a becomes sufficiently high relative to the pressure of the high pressure oil line 30 while a first piston 11a moves from a bottom dead center to a top dead center, so as to form a flow of the high pressure oil flowing to the high pressure oil line 30 from first working chamber 13a through first high pressure valve 15a. In contrast, the first low pressure valve 16a is opened when the solenoid is de-energized while the first piston 11a moves from the top dead center to the bottom dead center, so as to form a flow of the low pressure oil flowing to the first working chamber 13a from the low pressure oil line 31 through the first low pressure valve 16a.

In another embodiment, both the first high pressure valve 15a and the low pressure valve 16a may be constituted by electromagnetic valves whose opening and closing can be actively controlled.

A second high pressure valve 15b is provided in a second high pressure communication path 17b disposed between the high pressure oil line 30 and the at least one second working chamber 13b belonging to a second group among the plurality of working chambers 13, and a second low pressure valve 16b is provided in a second low pressure communication path 18b disposed between the low pressure oil line 31 and the at least one second working chamber 13b. At least one of the second high pressure valve 15b or the second low pressure valve 16b is constituted by a valve whose opening and closing is passively controllable so as to restrict an operation state of the second working chamber 13b to an active state where there is displacement volume.

For instance, the second high pressure valve 15b is a check valve configured to allow only a flow of pressure oil flowing from the second working chamber 13b to the high pressure oil line 30, and the second low pressure valve 16b is a check valve configured to allow only a flow of pressure oil flowing from the low pressure oil line 31 to the second working chamber 13b. In this case, the second high pressure valve 15b is opened when the pressure of the second working chamber 13b becomes sufficiently high relative to the pressure of the high pressure oil line 30 while a second piston 11b moves from a bottom dead center to a top dead center, so as to form a flow of the high pressure oil flowing to the high pressure oil line 30 from second working chamber 13b through second high pressure valve 15b. In contrast, the second low pressure valve 16b is opened when the pressure of the second working chamber 14b becomes sufficiently low relative to the pressure of the low pressure oil line 31 while the second piston 11b moves from the top dead center to the bottom dead center, so as to form a flow of the low pressure oil flowing to the second working chamber 13b from the low pressure oil line 31 through the second low pressure valve 16b.

In this hydraulic pump 10, when the cam 14 rotates with the rotation shaft 5, the first piston 11a and the second piston 11b periodically reciprocate in accordance with the cam profile to repeat a pump stroke where the first piston 11a and the second piston 11b move from the bottom dead center to the top dead center and an intake stroke where the first piston 11a and the second piston 11b move from the top dead center to the bottom dead center. Therefore, the volume of the first working chamber 13a formed by the first piston 12a and the first cylinder 11a and the volume of the second working chamber 13b formed by the second piston 12b and the second cylinder 11b change periodically.

Among the plurality of working chambers 13 of the hydraulic pump 10, the first working chamber 13a belonging to the first group can be changed to the active state or the non-active state by actively controlling opening and closing of at least one of the first high pressure valve 15a or the first low pressure valve 16a. When the first working chamber 13a is in the active state, the first high pressure valve 15a is closed and the first low pressure valve 16a is opened during the intake stroke to allow the pressure oil to flow into the first working chamber 13a from the low pressure line 31, and the first high pressure valve 15a is opened and the first low pressure valve 16a is closed during the pump stroke to feed the pressurized pressure oil to the high pressure oil line 30 from the first working chamber 13a. On the other hand, when the first working chamber 13a is in the non-active state, the first high pressure valve 15a is kept closed and the first low pressure valve 16a is kept opened during both the intake stroke and the pump stroke so that the pressure oil moves back and force between the first working chamber 13a and the low pressure line 31 (in other words, the pressure oil is not fed to the high pressure oil line 30).

In the second working chamber 13b belonging to the second group among the plurality of working chambers 13 of the hydraulic pump 10, the opening and closing of the second high pressure valve 15b or the second low pressure valve 16b is passively controlled to always maintain the active state.

In the hydraulic pump 10 with the above configuration, by changing a ratio of the number of the first working chamber 13a in the active state to the number of all the working chambers (including the first working 13a and the second working chambers 13b), it is possible to adjust the total displacement D_{P} of the hydraulic pump 10. Meanwhile, D_{Pmin} which is the minimum value of the variable displacement range of the hydraulic pump 10 is defined according to the number and volume of the second working chambers 13b. Specifically, since the second working chambers 13b are always in the active state, even if all of the first working chambers 13a are changed into the non active state, there is still displacement volume D_{P}, because of the second working chambers 13b in the active state, to generate high pressure oil. Further, the displacement D_{P} may be calculated by multiplying the number of the working chamber 13 in the active state by the volume of each working chamber 13 and thus, D_{Pmin} which is the minimum value of the variable displacement range of the hydraulic pump 10 is defined according to the number and volume of the second working chambers 13b.

As described above, at least one of the first high pressure valve 15a or the first low pressure valve 16a provided for the first working chamber 13a belonging to the first group among the plurality of working chambers 13 is constituted by a valve whose opening and closing is actively controllable so as to change an operation state of the first working chamber 13a between the active state where there is displacement volume and the non-active state where there is no displacement volume. With this configuration, the displacement D_{P} is variable by means of the fist working chamber 13a. Further, as compared to a fixed displacement hydraulic pump, the freedom of controlling the hydraulic transmission 6 can be secured and the capacity of the devices within the hydraulic transmission 6 for regulating an amount of oil flowing into the hydraulic motor 20 from the hydraulic pump 10 (e.g. a relief valve and the like arranged in the bypass line 34 between the high pressure oil line 30 and the low pressure oil line 31) can be reduced.

The total displacement volume of the hydraulic pump 10 can be adjusted by a pump control part 52 which is described later.

In one embodiment, the minimum value D_{Pmin} of the displacement Dp of the hydraulic pump 10 is not less than 0.25×D_{Pmax} and not greater than 0.75×D_{Pmax}.

As a result, it is possible to secure the freedom of controlling the hydraulic transmission 6 and also reduce the device cost.

Further, in one embodiment, the minimum value D_{Pmin} of the variable range of the hydraulic pump 10 may be approximately 0.5.

The hydraulic motor 20 shown in FIG.3 comprises a plurality of working chambers 23 formed by cylinders 21 and pistons 22, a cam 24 having a cam profile engageable with the pistons 22, and a high pressure valve 25 and a low pressure valve26 provided for each of the working chambers 23.

The high pressure valve 25 is provided in a high pressure communication path 27 between each working chamber 23 and the high pressure oil line 30, and the low pressure valve 26 is provided in a low pressure communication path 28 between each working chamber 23 and the low pressure oil line 31.

In this hydraulic motor 20, the piston 22 reciprocates periodically due to a pressure difference generated by the hydraulic pump 10 between the high pressure oil line 30 and the low pressure oil line 31 to repeat to repeat a motor stroke where the piston 22 moves from the top dead center to the bottom dead center a discharge stroke where the piston 22 moves from the bottom dead center to the top dead center. During operation of the hydraulic motor 20, the volume of the working chamber 22 formed by the piston 22 and an inner wall surface of the cylinder 21 changes periodically.

In the hydraulic motor 20, each working chamber 23 can be changed to an active state or a non active state by controlling opening and closing of the high pressure valve 25 and the low-pressure valve 26. When the first working chamber 23 is in the active state, the high pressure valve 25 is opened and the low pressure valve 26 is closed during the motor stroke to allow the pressure oil to flow into the working chamber 23 from the high pressure line 30, and the high pressure valve 25 is closed and the low pressure valve 26 is opened during the discharge stroke to discharge the pressure oil having performed work in the working chamber 23. On the other hand, when the working chamber 23 is in the non-active state, the high pressure valve 25 is maintained closed and the low pressure valve 26 is maintained opened during both the motor stroke and the discharge stroke so that the pressure oil moves back and force between the working chamber 23 and the low pressure line 31 (in other words, the high pressure oil is not fed to the working chamber 23 from the high pressure oil line 30). In the manner similar to the hydraulic pump 10, in the hydraulic motor 20, it is possible to adjust the total displacement by changing a ratio of the number of the working chamber 23 in the active state to the number of all the working chambers. The total displacement of the hydraulic motor 20 can be adjusted by a motor control part 53 which is described later.

In addition, the hydraulic pump 10 and the hydraulic motor 20 may not be limited to the piston type which is described above, and may be any hydraulic mechanism of variable displacement type, such as vane type. Moreover, as a hydraulic mechanism of a piston type, an axial piston pump or motor, a radial piston pump or motor, a reciprocating piston pump or motor, etc. can be used.

In reference to FIG.1, the hydraulic transmission 6 further comprises the bypass line 34 which connects the high pressure oil line 30 and the low pressure oil line 31, and a bypass valve 35 provided in the bypass line 34. The bypass valve 35 is the valve configured to adjust the pressure of the pressure oil in the high pressure oil line 30. For example, the bypass valve 35 may be a relief valve (pressure relief valve) in which a setting pressure can be changed, or may be a pressure adjusting valve in which an opening degree is controllable. The bypass valve 35 is controlled by a bypass control part 54 described later so that the pressure Pₐ of the pressure oil of the high pressure oil line 30 becomes to a target pressure.

Moreover, an accumulator 32 may be connected to the high pressure oil line 30 for the purpose of pulsation prevention or pressure accumulation. For example, the accumulator 32 for pulsation prevention can absorb change of the pressure of the pressure oil in the high pressure oil line 30. Therefore, the pressure of the high pressure oil line 30 can be stabilized by the accumulator 32. Similarly, the accumulator 33 for pulaton prevention may be connected to the low pressure oil line 31.

Further, the hydraulic transmission 6 may be suitably equipped with a variety of apparatuses, such as an oil filter for removing impurities in the pressure oil, an oil tank for reserving the pressure oil and an oil cooler for cooling the pressure oil.

The wind turbine generator 1 is equipped with a variety of measuring equipments. For example, a rotation speed meter 41 for measuring the rotor rotation speed which is the rotation speed of the rotation shaft 5, a pressure gauge 42 for measuring the pressure of the pressure oil of the high pressure oil line 30, and a rotation speed meter 43 for measuring a rotation speed of the hydraulic motor 20 are provided as measuring equipments. Although not shown in the drawings, an anemometer for measuring a wind velocity or an output meter for measuring the output of the generator 8, etc. are also provided. The measurement values of these measuring equipments are sent to a controller 50 to be used for a pitch control of the blade 2, a control of displacement volume of the hydraulic motor 20, a control of opening degree of the bypass valve 35, or the like.

Next, the configuration of the controller 50 is explained.

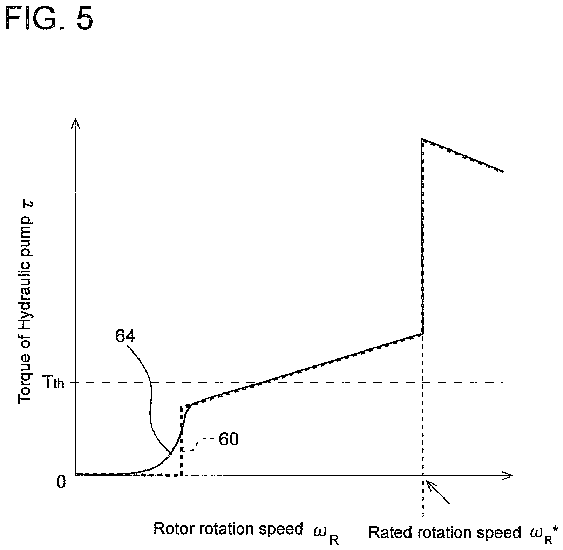

In some embodiments, the controller 50 includes the pitch control part 51, the pump control part 52, the motor control part 53, the bypass control part 54, and a memory part 55. The memory part 55 may store an optimal operation curve 60 shown in FIG.5, and the like. Further, the optimal operation curve 60 is described later.

The pitch control part 51 calculates a control command for controlling the pitch angle of the blade 2, and outputs this control command to the actuator for changing the pitch angle of the blade 2.

The pump control part 52 calculates the control command for controlling the displacement of the hydraulic pump 10, and outputs this control command to the hydraulic pump 10. For example, in the wind turbine generator 1 equipped with the hydraulic pump 10 shown in FIG.2, in order to control the total displacement D_{P} of the hydraulic pump 10, the opening and closing of the first high pressure valve 15a or the first low pressure valve 16a is controlled so as to control the ratio of the number of the first working chamber 13a in the active state to the number of all the working chambers 13a, 13b, i.e. a displacement ratio P_{Fd}. Therefore, in the hydraulic pump 10, the control command containing the displacement ratio P_{Fd} is calculated, and this control command is output to the first high pressure valve 15a or the first low pressure valve 16a to control the total displacement D_{P} of the hydraulic pump 10.

The motor control part 53 calculates the control command for controlling the displacement of the hydraulic motor 20, and outputs this control command to the hydraulic motor 20. For example, in the wind turbine generator 1 equipped with the hydraulic motor 20 shown in FIG.3, in order to control the total displacement D_{M} of the hydraulic motor 20, the opening and closing of the high pressure valve 25 or the low pressure valve 26 is controlled so as to control the ratio of the number of the working chamber 23 in the active state to the number of all the working chambers 23, i.e. a displacement ratio M_{Fd}. Therefore, in the hydraulic motor 20, the control command containing the displacement ratio M_{Fd} is calculated, and this control command is output to the high pressure valve 25 or the low pressure valve 26 to control the total displacement D_{M} of the hydraulic motor 20.

The bypass control part 54 is configured to control the bypass valve 35 so as to adjust the pressure of the pressure oil in the high pressure oil line 30.

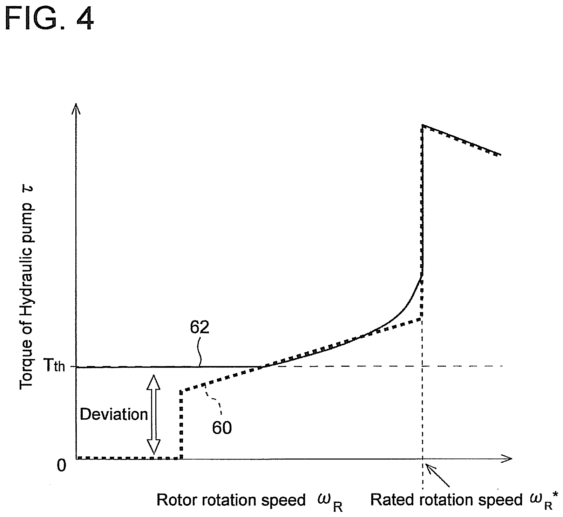

Here, with reference to FIG.4 and FIG.5, the control of the comparative example and the control of this embodiment are explained. FIG.4 is an illustration of an optimal operation curve (τ-ω curve) 60 and a control curve 62 of the comparative example. FIG.5 is an illustration of an optimal operation curve (τ-ω curve) 60 and a control curve 64 of the present embodiment.

Further, the optimal operation curve (τ-ω curve) 60 is set, as to a variable speed region where the rotor speed is not greater than its rated rotation speed ω_{R}*, to realize the optimal operation of the wind turbine generator 1.

As shown in FIG.4, the control in the comparative example does not have the above-mentioned bypass control part 54, and is configured to control the displacement D_{P} of the hydraulic pump 10 so as to always control the torque T of the hydraulic pump 10 indirectly. For this reason, change in the wind speed or the like may lead to aggravation (delay) of the control performance of the rotor rotation speed ω_{R}. For example, there is deviation, below the threshold torque Tₜₕ of the hydraulic pump 10, between the control curve 62 of the comparative example and the optimal operation curve 60 showing the prescribed correlation between the the rotor rotation speed ω_{R} and the torque T of the hydraulic pump 10.

Thus, in this embodiment, as shown in FIG.5, the control curve 64 is used, which combines the bypass control for controlling the opening degree of the bypass valve 35 for the purpose of controlling the rotor rotation speed ω_{R} and the pump control of controlling the displacement of the hydraulic pump 10.

As shown in FIG.5, in the control according to this embodiment, the bypass valve control part 54 is configured to control the pressure Pa of the pressure oil in the high pressure oil line 30 in accordance with the optimal operation curve 60 which is the prescribed correlation between the rotor rotation speed ω_{R} and the torque T of the hydraulic pump 10 in the range of not greater than the threshold torque Tₜₕ of the hydraulic pump 10. Here, the threshold torque Tth is defined at least by the minimum value D_{Pmin} of the displacement D_{P} of the hydraulic pump 10 the minimum value Pₘᵢₙ of the pressure in the high pressure oil line 30 while the bypass valve 35 is fully closed.

As described above, the bypass valve 35 is provided in the bypass line 34 which connects the high pressure oil line 30 and the low pressure oil line 31, and the pressure in the high pressure oil line 30 can be regulated by control of the bypass valve 35 using the bypass control part 54. As a result, the torque control of the hydraulic pump 10 using the pressure of the high pressure oil line 30 becomes possible. Therefore, the pressure Pₐ of the pressure oil in the high pressure oil line 30 is controlled in accordance with the optimal operation curve 60 which is the prescribed correlation between the rotation speed of the hydraulic pump 10 (i.e. the rotor rotation speed ω_{R} in the wind turbine generator 1) and torque T of the hydraulic pump 10 so as to adjust the torque T of the hydraulic pump 10 to a target value according to the rotor rotation speed ω_{R}, in a range of less than the threshold torque Tₜₕ where the torque control through displacement adjustment of the hydraulic pump 10 is difficult. As a result, it is possible to make the torque of the hydraulic pump to an appropriate value even at low load of the hydraulic pump. For instance, in FIG.4, the bypass valve control part 54 controls the pressure Pₐ of the pressure oil in the high pressure oil line, in the second range which is less than the threshold torque Tth of the hydraulic pump, in accordance with the optimal operation curve 60. As a result, it is possible to make the torque T of the hydraulic pump 10 to an appropriate value along the prescribed correlation 60 even at low load of the hydraulic pump 10.

In addition to the control by the above bypass control part 54, the pump control part 52 may be configured to adjust the displacement D_{P} of the hydraulic pump 10 within the range from D_{Pmin} to D_{Pmax} so as to adjust the torque T of the hydraulic pump 10 to the target value according to the rotor rotation speed ω_{R} in accordance with the optimal operation curve 60, in a range of not less than the threshold torque Tₜₕ of the hydraulic pump 10, i.e. at high load of the hydraulic pump 10. For instance, as illustrated in FIG.4, the pump control part 52 adjusts the displacement D_{P} of hydraulic pump 10 within the third range of not less than the threshold torque Tₜₕ of the hydraulic pump 10 so as to make the torque T of the hydraulic pump 10 to an appropriate value along the optimal operation curve 60. As the displacement D_{P} of hydraulic pump 10 is controlled within the range from D_{Pmin} to D_{Pmax} at high load of the hydraulic pump 10, it is possible to adjust the torque T of the hydraulic pump 10 to the target value according to the rotor rotation speed ω_{R}, in accordance with the prescribed correlation 60 between the rotor rotation speed ω_{R} and the torque T of the hydraulic pump 10.

Moreover, when making rotation start the hydraulic pump 10 from a stop state at least at the time of starting of the hydraulic transmission 6, the bypass valve control part 54 may be configured to control the bypass valve to a full open position at least when the hydraulic pump 10 is started from a standby state in starting of the hydraulic transmission 6.

In this embodiment, the displacement D_{P} of hydraulic pump 10 is variable within the range from D_{Pmin} to D_{Pmax} (D_{Pmin}>0). Thus, load torque is generated even when the input energy to the hydraulic transmission 6 is small during starting of the hydraulic transmission 6. Therefore, the bypass valve 35 is controlled to a full open position at least when the hydraulic pump 10 is started from a standby state during starting of the hydraulic transmission 6. As a result, it is possible to minimize the load torque of the hydraulic transmission 6 close to zero and this facilitates starting of the hydraulic pump 10.

Further, the bypass control part 54 may be configured to control the bypass valve 35 after rotation of the hydraulic pump 10 is started in the starting of the hydraulic transmission 6 so that the pressure in the high pressure oil line 30 reaches a pressure Pa at which an initial torque required to start rotation of the hydraulic motor 20 from a standby state is achieved.

As a result, even when the initial torque is required to start the hydraulic motor 20, the required initial torque can be secured by adjusting the pressure in the high pressure oil line 30 by controlling the bypass valve 35. Thus, the hydraulic motor 20 can be started smoothly.

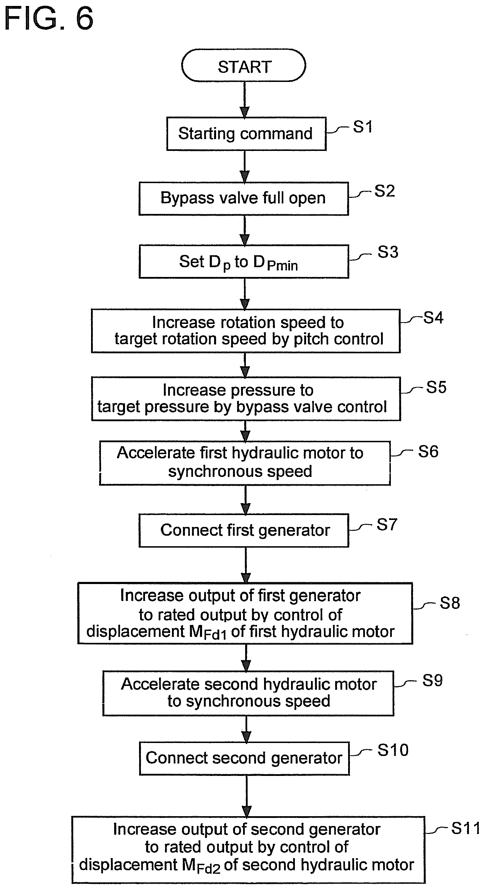

Hereafter, with reference to FIG.6, the operation method for the wind turbine generator 1 according to one embodiment is explained. FIG.6 is a flow chart illustrating an operation method for the wind turbine generator 1 according to one embodiment. In the following description, the wind turbine generator 1 has, as one example, one hydraulic pump, two hydraulic motors (a first hydraulic motor and a second hydraulic motor) and two generators (a first generator and a second generator) respectively connected to the two hydraulic motors.

As shown in FIG.6, a starting command is inputted to the controller 50 of the wind turbine generator 1 (S1), and then in order to obtain the initial torque required to start the rotation from the standby state of the hydraulic motor 20, the bypass valve 35 provided in the bypass line 34 is controlled by the bypass control part 54 to a full open position (S2). Next, the displacement D_{P} of the hydraulic pump 10 is set to D_{Pmin} which is the minimum value of the variable displacement range of the hydraulic pump 10 so as to facilitate acceleration of the rotor rotation speed ω_{R} (S3). Then, the rotor rotation speed ω_{R} is increased to a target rotation speed by the pitch control part 52 (S4). Subsequently, the opening degree of the bypass valve 35 is controlled by the bypass control part 54, and the pressure in the high pressure oil line 30 is increased to the target pressure (S5). And the first hydraulic motor is accelerated to a synchronous speed (S6). Meanwhile, the displacement D_{P} of the hydraulic pump 10 may be controlled within the range from D_{Pmin} to D_{Pmax} according to the optimal operation curve 60 shown in FIG.5, so as to adjust the torque T of the hydraulic pump 10 to the target value according to the rotation speed of the hydraulic pump 10.

Once the first generator connected to the first hydraulic motor and the grid are synchronized, the first generator is connected (S7). At this time, the first generator and the grid may be synchronized using a synchronizer. After the first generator is connected, the displacement DM of the first hydraulic motor is increased to the maximum value D_{Mmax1} so as to raise the output of the first generator to a rated output (S8). Meanwhile, the displacement D_{P} of the hydraulic pump 10 may be maintained at D_{Pmin}, and the pressure Pa of the pressure oil in the high pressure oil line 30 may be controlled according to the optimal operation curve 60 shown in FIG.5, so as to adjust the torque T of the hydraulic pump 10 to the target value according to the rotor rotation speed ω_{R}.

Next, the second hydraulic motor is accelerated to a synchronous speed (S9).

Then, once the second generator connected to the second hydraulic motor and the grid are synchronized, the second generator is connected (S10). Once the second generator is connected, the displacement D_{M2} of the second hydraulic motor is increased to the maximum value D_{Mmax2} so as to raise the output of the second generator to a rated output (S11).

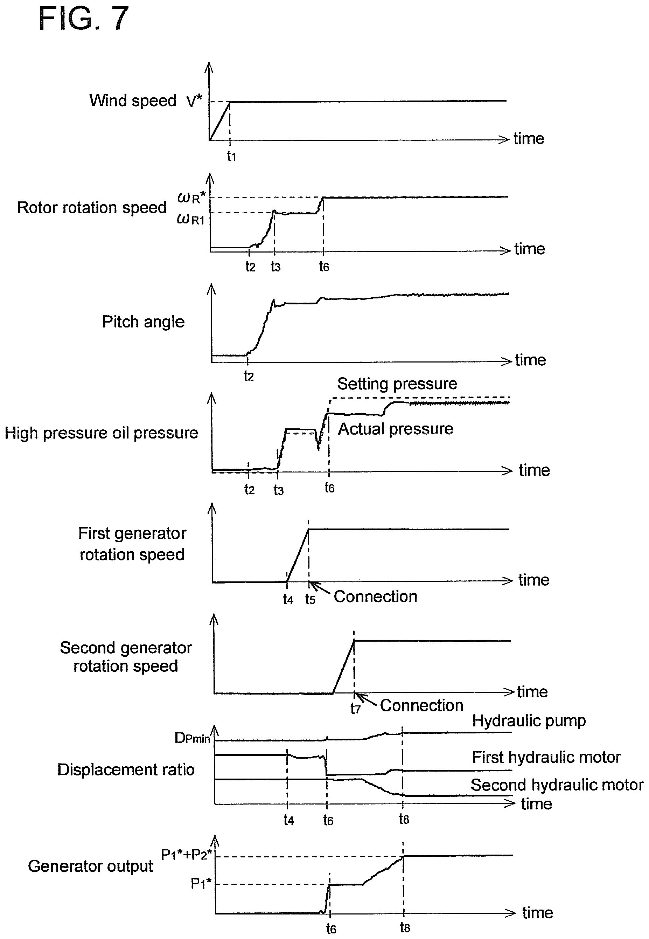

FIG.7 shows a simulation result of each parameter in the wind turbine generator 1 when the wind speed is constant at a rated wind speed.

As illustrated in the drawing, starting of the wind turbine generator 1 becomes possible at time t₁ when the wind speed reaches a rated wind speed V*. Therefore, the pitch control part 51 control the pitch angle to gradually increase from time t₂ which is immediately after time t₁. In response to this, the rotor rotation speed ω_{R} increases gradually after time t₂. Meanwhile, if the pressure of the pressure oil in the high pressure oil line 30 is high, this can affect the acceleration speed of the rotor 4 and thus, the wind turbine generator 1 is started in the state where the bypass valve 35 is controlled to the full open position by the bypass control part 54. Further, in this simulation, a relief valve in which a setting pressure can be changed can be used as the bypass valve 35, and the setting pressure is set to about 0 at time t₂. At this time, the displacement D_{P} of the hydraulic pump is set to D_{Pmin}. At time t₃ when the rotor rotation speed reaches the initial rotation speed ω_{R1}, the setting pressure of the relief valve is gradually raised. Once the setting pressure of the relief valve is raised, since the discharge amount of the hydraulic pump is excessive relative to the suction amount of the hydraulic motor (=0), the pressure in the high pressure oil line raises as well in response to the rising of the setting pressure of the relief valve. In this manner, the pressure in the high pressure oil line is raised to a pressure at which the initial torque required for starting the hydraulic motor 20 can be given.

At time t₄, the rotation speed of the first hydraulic motor and the first generator connected to the first hydraulic motor is raised by increasing the displacement of the first hydraulic motor greater than 0. After the rotation speed of the first generator reaches the synchronous speed (= generator rotation speed corresponding to the grid frequency) and the phase of the first generator is synchronized with the phase on the grid side, the first generator is connected to the grid at time t₅.

Then, the displacement D_{M} of the first hydraulic motor is gradually increased to D_{Mmax}, enlarging gradually, and the setting pressure of the relief valve is gradually increased to the maximum value. Moreover, at this time, the pitch angle is increased by pitch control to raise the rotor rotation speed to the rated rotation speed ω_{R}*. Next, at time t₆, the rotor rotation speed reaches the rated rotation speed ω_{R} * and the displacement of the hydraulic motor 20 reaches D_{Mmax}, and the generator output reaches the rated output P₁* of the first generator. After this, the rotation speeds of the second hydraulic motor and the second generator connected to the second hydraulic motor are raised by increasing the displacement of the second hydraulic motor to be greater than 0. After the rotation speed of the second generator reaches the synchronous speed (=generator rotation speed corresponding to the grid frequency) and the phase of the second generator with the phase of the grid side, at time t₇, the second generator is connected to the grid. Then, while increasing the displacement of the second hydraulic motor toward the maximum value, the displacement of the hydraulic pump is gradually increased toward the maximum value. Finally, at time t₈, the displacement of the second hydraulic motor and the displacement of the hydraulic pump reach respective maximum values. At this time, the generator output reaches the sum (=P₁*+P₂*) of the rated output P₁* of the first generator and the rated output P₂* of the second generator.

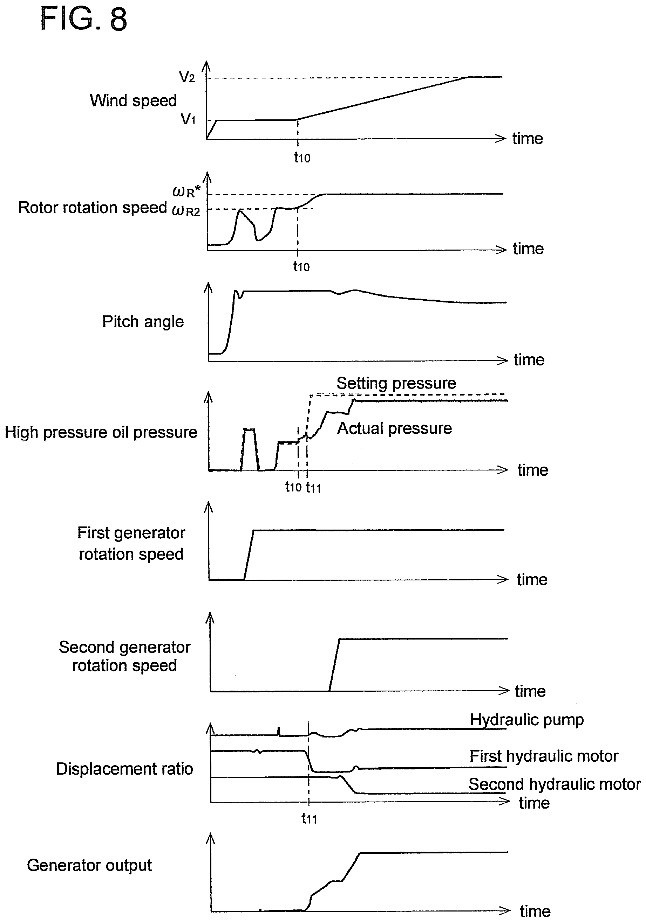

FIG.8 shows a simulation result of each parameter in the wind turbine generator 1 in the case where the wind speed gradually increases from a low wind speed below the rated wind speed to the rated wind speed. Since the simulation result shown in FIG.8 is fundamentally the same as the simulation result shown in FIG.7, mainly the points hat are different from FIG.7 are explained here.

As shown in FIG.8, after the first generator is connected to the grid, the wind speed begins to increase from V₁ toward V₂ at time t₁₀. In response to this, the rotor rotation speed rises from ω_{R2} to the rated rotation speed ω_{R}*. In this process, the prescribed correlation (a part of the τ-ω curve below the threshold torque) between the rotor rotation speed and the torque of the hydraulic pump is realized by adjusting the setting pressure of the relief valve. And since the torque of the hydraulic pump reaches the threshold torque at time t₁₁, the setting pressure of the relief valve is suddenly increased to make the relief valve into practically fully open state. Then, the displacement of the hydraulic pump starts being adjusted according to the correlation (a part of the τ-ω curve equal to or above the threshold torque) between the rotor rotation speed and the torque of the hydraulic pump.

Thus, as shown in the simulation result of FIG.8, the optimal partial load operation of the wind turbine generator 1 using the setting pressure adjustment of the relief valve as well as the displacement adjustment of the hydraulic pump becomes possible with the threshold torque of the hydraulic pump as a border line.

As explained above, it is possible to reduce the number of active control valves of the hydraulic pump 10 (e.g. the first high pressure valve 15a or the first low pressure valve 16a), compared to the case where the control valves are provided for all the cylinders of the hydraulic pump 10. As a result, it is possible to achieve reduction of the device cost. Further, with the reduced number of active control valves of the hydraulic pump 10, the minimum discharge amount from the hydraulic pump 10 can be reduced. As a result, it is possible to reduce capacity of devices for restricting an amount of oil flowing into the hydraulic motor 20 from the hydraulic pump 10. Further, the pressure Pₐ of the pressure oil in the high pressure oil line 30 is controlled in accordance with the prescribed correlation 60 between the rotation speed of the hydraulic pump and the torque of the hydraulic pump, so as to adjust the torque T of the hydraulic pump 10 to the target valuve according to the rotation speed ω_{R}. As a result, it is possible to make the torque T of the hydraulic pump 10 to an appropriate value even at low load of the hydraulic pump 10.

The embodiments of the present invention were described in detail. It is intended, however, that unless particularly specified in these embodiments, various improvement and modification can be made within a scope that does not depart from the scope of the present invention.

For example, although the hydraulic transmission explained in the above embodiments is applied to a power generating apparatus of renewable energy type. This is, however, not restrictive, and the hydraulic transmission may be applied to other equipments, such as ocean current power generation control and a vessel propeller control machine, a civil engineering machine, and a construction machine. Here, the power generating apparatus of renewable energy type is power generating apparatus using renewable energy such as wind, tidal current, ocean current and river current, and there are, for instance, a wind turbine generator, a tidal generator, an ocean current generator, a river current generator, and the like.

### [Reference Signs list]

- 1: Wind turbine generator
- 2: Blade
- 3: Hub
- 4: Rotor
- 5: Rotation shaft
- 6: Hydraulic transmission
- 7: Output shaft
- 8: Generator
- 9: Grid
- 10: Hydraulic pump
- 11, 21: Cylinder
- 11a: First cylinder
- 11b: Second cylinder
- 12, 22: Piston
- 12a: First piston
- 12b: Second piston
- 13, 23: Working chamber
- 13a: First working chamber
- 13b: Second working chamber
- 14, 24: Cam
- 15a: First high pressure valve
- 15b: Second high pressure valve
- 16a: First low pressure valve
- 16b: Second low pressure valve
- 17, 27: High pressure communication path
- 18, 28: Low pressure communication path
- 20: Hydraulic motor
- 30: High pressure oil line
- 31: Low pressure oil line
- 32, 33: Accumulator
- 34: Bypass line
- 35: Bypass valve
- 41, 43: Rotation speed meter
- 42: Pressure gauge
- 50: Controller
- 51: Pitch control part
- 52: Pump control part
- 53: Motor control part
- 54: Bypass control part
- 60: Optimal operation curve (τ-ω curve)

## Claims

1. A hydraulic transmission (6) comprising:
a hydraulic pump (10) of variable displacement type configured to be driven by mechanical energy input to a rotation shaft (5); and
a hydraulic motor (20) of variable displacement type configured to be driven by pressure oil from the hydraulic pump (10),
wherein the hydraulic pump (10) is configured such that displacement D_{P} of the hydraulic pump (10) is variable within a range from D_{Pmin} to D_{Pmax}, where D_{Pmin} is a minimum value and D_{Pmax} is a maximum value of the displacement D_{P},
wherein the hydraulic motor (20) is configured such that displacement D_{M} of the hydraulic motor (20) is variable within a range from D_{Mmin} to D_{Mmax}, where D_{Mmin} is a minimum value and D_{Mmax} is a maximum value of the displacement D_{M},
wherein the minimum value D_{Mmin} which is a lower limit of the variable range for the displacement of the hydraulic motor (20) is equal to zero,
wherein the hydraulic pump (10) comprises:
a plurality of pistons (12, 22);
a plurality of cylinders (11, 21) configured to guide the plurality of pistons (12, 22) reciprocably and form a plurality of working chambers (13, 23) with the plurality of pistons (12, 22), respectively;
at least one set of a first high pressure valve (15a) and a first low pressure valve (16a) provided for at least one first working chamber (13a) belonging to a first group among the plurality of working chambers (13);
wherein at least one of the first high pressure valve (15a) or the first low pressure valve (16a) is constituted by a valve whose opening and closing is actively controllable so as to change an operation state of the at least one first working chamber (13a) between an active state where there is displacement volume and a non-active state where there is no displacement volume, the hydraulic pump further comprises at least one set of a second high pressure valve (15b) and a second low pressure valve (16b) provided for at least one second working chamber (13b) belonging to a second group among the plurality of working chambers (13), wherein the minimum value DPmin, which is a lower limit of the variable range for the displacement of the hydraulic pump (10) is greater than zero, **characterized by** the second group being different from the first group,
wherein each of the second high pressure valve (15b) and the second low pressure valve (16b) are constituted by a valve whose opening and closing is passively controllable so as to restrict the at least one second working chamber (13b) to an active state where there is displacement volume, and
wherein the minimum value D_{Pmin} of the variable range for the displacement of the hydraulic pump (10) is determined in accordance with the number and volume of the second working chambers (13b).

2. The hydraulic transmission (6) according to claim 1, further comprising:
a high pressure oil line (30) provided between a discharge port of the hydraulic pump (10) and an inlet port of the hydraulic motor (20) to direct the pressure oil from the hydraulic pump (10) to the hydraulic motor (20);
a low pressure oil line provided between a discharge port of the hydraulic motor (20) and an inlet port of the hydraulic pump (10) to direct operating oil from the hydraulic motor (20) to the hydraulic pump (10), the said operating oil having pressure lower than the said pressure oil;
a bypass line (34) connecting the high pressure oil line (30) and the low pressure oil line;
a bypass valve (35) provided in the bypass line (34); and
a bypass valve (35) control part configured to control the bypass valve (35) so as to adjust a pressure of the pressure oil in the high pressure oil line (30),
wherein the bypass valve (35) control part is configured to control the pressure of the pressure oil in the high pressure oil line (30) in accordance with a prescribed correlation between a rotation speed of the hydraulic pump (10) and torque of the hydraulic pump (10) so as to adjust the torque of the hydraulic pump (10) to a target value according to the rotation speed of the hydraulic pump (10) in a range of less than threshold torque Tₜₕ of the hydraulic pump (10) that is determined by at least the minimum value D_{Pmin} of the displacement D_{P} and a minimum value of the pressure in the high pressure oil line (30) when the bypass valve (35) is fully closed.

3. The hydraulic transmission (6) according to claim 2, further comprising:
a pump control part (52) configured to control the hydraulic pump (10) to adjust the displacement D_{P} of the hydraulic pump (10),
wherein the pump control part (52) is configured to control the displacement D_{P} of hydraulic pump (10) within the range from D_{Pmin} to D_{Pmax} so as to adjust the torque of the hydraulic pump (10) to the target value according to the rotation speed of the hydraulic pump (10) in accordance with the prescribed correlation between the rotation speed of the hydraulic pump and the torque of the hydraulic pump (10), in a range of not less than the threshold torque Tₜₕ.

4. The hydraulic transmission (6) according to any one of claims 1 to 3,
wherein the minimum value D_{Pmin} of the displacement D_{P} of the hydraulic pump (10) is not less than 0.25×D_{Pmax} and not greater than 0.75×D_{Pmax}.

5. The hydraulic transmission (6) according to any one of claims 1 to 4, further comprising:
a high pressure oil line (30) provided between a discharge port of the hydraulic pump (10) and an inlet port of the hydraulic motor (20) to direct the pressure oil from the hydraulic pump (10) to the hydraulic motor (20);
a low pressure oil line (31) provided between a discharge port of the hydraulic motor (20) and an inlet port of the hydraulic pump (10) to direct operating oil from the hydraulic motor (20) to the hydraulic pump (10), the said operating oil having pressure lower than the said pressure oil;
a bypass line (34) connecting the high pressure oil line (30) and the low pressure oil line (31);
a bypass valve (35) provided in the bypass line (34) to control a flow of the pressure oil flowing in the bypass line (34) from the high pressure oil line (30) toward the low pressure oil line (31); and
a bypass valve (35) control part configured to control the bypass valve (35) so as to adjust a pressure of the pressure oil in the high pressure oil line (30),
wherein the bypass valve (35) control part is configured to control the bypass valve (35) to a full open position at least when the hydraulic pump (10) is started from a standby state in starting of the hydraulic transmission.

6. The hydraulic transmission (6) according to claim 5, w
herein a bypass control part (54) is configured to control the bypass valve (35) after rotation of the hydraulic pump (10) is started in the starting of the hydraulic transmission so that the pressure in the high pressure oil line (30) reaches a pressure at which an initial torque required to start rotation of the hydraulic motor (20) from a standby state is achieved.

7. A power generating apparatus of renewable energy type comprising:
at least one blade (2);
a rotation shaft (5) configured to be rotated by renewable energy received by the at least one blade (2);
the hydraulic transmission according to any one of claims 1 to 6;
a generator configured to be driven by the hydraulic motor (20).

8. The power generating apparatus of renewable energy type according to claim 7,
wherein the power generating apparatus of renewable energy type is a wind turbine generator (1) which is configured so that electric power is generated by the generator (8) using wind power energy that the at least one blade (2) receives from wind in a form of renewable energy.

9. An operation method for a hydraulic transmission (6) which comprises a hydraulic pump (10) of variable displacement type having displacement D_{P} that is variable within a first variable range and configured to be driven by mechanical energy input to a rotation shaft (5), a hydraulic motor (20) of variable displacement type having displacement D_{M} that is variable within a second variable range and configured to be driven by pressure oil from the hydraulic pump (10), a high pressure oil line (30) provided between a discharge port of the hydraulic pump (10) and an inlet port of the hydraulic motor (20), a low pressure oil line (31) provided between a discharge port of the hydraulic motor (20) and an inlet port of the hydraulic pump (10), a bypass line (34) connecting the high pressure oil line (30) and the low pressure oil line (31), and a bypass valve (35) provided in the bypass line (34),
wherein the first variable range of the hydraulic pump (10) is not less than D_{Pmin} and not greater than D_{Pmax} where D_{Pmin} is a minimum value and D_{Pmax} is a maximum value of the displacement D_{P}, and the minimum value D_{Pmin} being a lower limit of the first variable range is greater than zero,
wherein the second variable range of the hydraulic motor (20) is not less than DMmin and not greater than D_{Mmax} where D_{Mmin} is a minimum value and D_{Mmax} is a maximum value of the displacement D_{M}, and the minimum value D_{Mmin} being a lower limit of the second variable range is equal to zero, and
wherein the operation method comprises the step of:
controlling, in accordance with a prescribed correlation between a rotation speed of the hydraulic pump (10) and torque of the hydraulic pump (10), a pressure of the pressure oil in the high pressure oil line (30) so as to adjust the torque of the hydraulic pump (10) to a target value according to the rotation speed of the hydraulic pump (10) in a range of less than threshold torque Tₜₕ of the hydraulic pump (10) that is determined by at least the minimum value D_{Pmin} of the displacement D_{P} and a minimum value of the pressure in the high pressure oil line (30) when the bypass valve (35) is fully closed.

10. An operation method for a power generating apparatus of renewable energy type which comprises at least one blade (2), a rotation shaft (5) configured to be rotated by renewable energy received by the at least one blade (2), a hydraulic pump (10) of variable displacement type having displacement D_{P} that is variable within a first variable range and configured to be driven by mechanical energy input to the rotation shaft (5), a hydraulic motor (20) of variable displacement type having displacement D_{M} that is variable within a second variable range and configured to be driven by pressure oil from the hydraulic pump (10), a high pressure oil line (30) provided between a discharge port of the hydraulic pump (10) and an inlet port of the hydraulic motor (20), a low pressure oil line (31) provided between a discharge port of the hydraulic motor (20) and an inlet port of the hydraulic pump (10), a bypass line (34) connecting the high pressure oil line (30) and the low pressure oil line (31), and a bypass valve (35) provided in the bypass line (34),
wherein the first variable range of the hydraulic pump (10) is not less than D_{Pmin} and not greater than D_{Pmax} where D_{Pmin} is a minimum value and D_{Pmax} is a maximum value of the displacement D_{P}, and the minimum value D_{Pmin} being a lower limit of the first variable range is greater than zero,
wherein the second variable range of the hydraulic motor (20) is not less than D_{Mmin} and not greater than D_{Mmax} where D_{Mmin} is a minimum value and D_{Mmax} is a maximum value of the displacement D_{M}, and the minimum value D_{Mmin} being a lower limit of the second variable range is equal to zero, and wherein the operation method comprises the step of: controlling, in accordance with a prescribed correlation between a rotation speed of the hydraulic pump (10) and torque of the hydraulic pump (10), a pressure of the pressure oil in the high pressure oil line (30) so as to adjust the torque of the hydraulic pump (10) to a target value according to the rotation speed of the hydraulic pump (10) in a range of less than threshold torque Tth of the hydraulic pump (10) that is determined by at least the minimum value DPmin of the displacement DP and a minimum value of the pressure in the high pressure oil line (30) when the bypass valve (35) is fully closed.

## Patentansprüche

1. Hydraulikgetriebe (6), umfassend:
eine Hydraulikpumpe (10) mit variabler Verdrängung, die dafür ausgelegt ist, durch eine mechanische Energie, die einer Drehwelle (5) zugeführt wird, angetrieben zu werden, und
einen Hydraulikmotor (20) mit variabler Verdrängung, die dafür ausgelegt, durch Drucköl von der Hydraulikpumpe (10) angetrieben zu werden,
wobei die Hydraulikpumpe (10) derart ausgelegt ist, dass die Verdrängung Dp der Hydraulikpumpe (10) innerhalb eines Bereichs von D_{Pmin} bis D_{Pmax} variabel ist, wobei D_{Pmin} ein Minimalwert und D_{Pmax} ein Maximalwert der Verdrängung D_{P} ist,
wobei der Hydraulikmotor (20) derart ausgelegt ist, dass die Verdrängung D_{M} des Hydraulikmotors (20) innerhalb eines Bereichs von D_{Mmin} bis D_{Mmax} variabel ist, wobei D_{Mmin} ein Minimalwert und D_{Mmax} ein Maximalwert der Verdrängung D_{M} ist,
wobei der Minimalwert D_{Mmin}, der eine Untergrenze des variablen Bereichs für die Verdrängung des Hydraulikmotors (20) ist, gleich Null ist,
wobei die Hydraulikpumpe (10) umfasst:
mehrere Kolben (12, 22),
mehrere Zylinder (11, 21), die dafür ausgelegt sind, die mehreren Kolben (12, 22) hin- und herzuführen und jeweils mehrere Arbeitskammern (13, 23) mit den mehreren Kolben (12, 22) zu bilden,
mindestens einen Satz aus einem ersten Hochdruckventil (15a) und einem ersten Niederdruckventil (16a), der für mindestens eine erste Arbeitskammer (13a) bereitgestellt ist, die einer ersten Gruppe unter den mehreren Arbeitskammern (13) angehört,
wobei mindestens eines von dem ersten Hochdruckventil (15a) oder dem ersten Niederdruckventil (16a) aus einem Ventil besteht, dessen Öffnung und Schließung aktiv steuerbar ist, um einen Betriebszustand der mindestens einen Arbeitskammer (13a) zwischen einem aktiven Zustand, in dem Verdrängungsvolumen vorhanden ist, und einem nichtaktiven Zustand, in dem kein Verdrängungsvolumen vorhanden ist, umzuschalten,
wobei die Hydraulikpumpe ferner mindestens einen Satz aus einem zweiten Hochdruckventil (15b) und einem zweiten Niederdruckventil (16b) umfasst, der für mindestens eine zweite Arbeitskammer (13b), die einer zweiten Gruppe unter den mehreren Arbeitskammern (13) angehört, bereitgestellt ist, wobei der Minimalwert D_{Pmin}, der eine Untergrenze des variablen Bereichs für die Verdrängung der Hydraulikpumpe (10) ist, gleich Null ist, **dadurch gekennzeichnet, dass** sich die zweite Gruppe von der ersten Gruppe unterscheidet,
wobei jedes von dem zweiten Hochdruckventil (15b) und dem zweiten Niederdruckventil (16b) aus einem Ventil besteht, dessen Öffnung und Schließung passiv steuerbar ist, um die mindestens eine zweite Arbeitskammer (13b) auf einen aktiven Zustand zu beschränken, in dem Verdrängungsvolumen vorhanden ist, und
wobei der Minimalwert D_{Pmin} des variablen Bereichs für die Verdrängung der Hydraulikpumpe (10) gemäß der Anzahl und Volumen der zweiten Arbeitskammern (13b) bestimmt wird.

2. Hydraulikgetriebe (6) nach Anspruch 1, ferner umfassend:
eine Hochdruckölleitung (30), die zwischen einer Auslassöffnung der Hydraulikpumpe (10) und einer Einlassöffnung des Hydraulikmotors (20) bereitgestellt ist, um das Drucköl von der Hydraulikpumpe (10) zu dem Hydraulikmotor (20) zu leiten,
eine Niederdruckölleitung, die zwischen einer Auslassöffnung des Hydraulikmotors (20) und einer Einlassöffnung der Hydraulikpumpe (10) bereitgestellt ist, um Betriebsöl von dem Hydraulikmotor (20) zu der Hydraulikpumpe (10) zu leiten, wobei das Betriebsöl einen Druck aufweist, der niedriger als der des Drucköls ist,
eine Bypassleitung (34), die die Hochdruckölleitung (30) und die Niederdruckölleitung verbindet,
ein Bypassventil (35), das in der Bypassleitung (34) bereitgestellt ist, und
ein Steuerteil des Bypassventils (35), das dafür ausgelegt ist, das Bypassventil (35) zu steuern, um einen Druck des Drucköls in der Hochdruckölleitung (30) anzupassen,
wobei das Steuerteil des Bypassventils (35) dafür ausgelegt ist, den Druck des Drucköls in der Hochdruckölleitung (30) gemäß einer vorgegebenen Korrelation zwischen einer Drehgeschwindigkeit der Hydraulikpumpe (10) und einem Drehmoment der Hydraulikpumpe (10) zu steuern, um das Drehmoment der Hydraulikpumpe (10) auf einen Zielwert gemäß der Drehgeschwindigkeit der Hydraulikpumpe (10) in einem Bereich von weniger als einem Schwellendrehmoment Tₜₕ der Hydraulikpumpe (10), der mindestens durch den Minimalwert D_{Pmin} der Verdrängung Dp und einen Minimalwert des Drucks in der Hochdruckölleitung (30), wenn das Ventil (35) vollständig geschlossen ist, bestimmt wird, anzupassen.

3. Hydraulikgetriebe (6) nach Anspruch 2, ferner umfassend:
ein Pumpensteuerteil (52), das dafür ausgelegt ist, die Hydraulikpumpe (10) zu steuern, um die Verdrängung Dp der Hydraulikpumpe (10) anzupassen,
wobei das Pumpensteuerteil (52) dafür ausgelegt ist, die Verdrängung Dp der Hydraulikpumpe (10) innerhalb des Bereichs von D_{Pmin} bis D_{Pmax} zu steuern, um das Drehmoment der Hydraulikpumpe (10) auf den Zielwert gemäß der Drehgeschwindigkeit der Hydraulikpumpe (10) gemäß einer vorgegebenen Korrelation zwischen der Drehgeschwindigkeit der Hydraulikpumpe und dem Drehmoment der Hydraulikpumpe (10) in einem Bereich von nicht weniger als dem Schwellenwert Tₜₕ anzupassen.

4. Hydraulikgetriebe (6) nach einem der Ansprüche 1 bis 3,
wobei der Minimalwert D_{Pmin} der Verdrängung D_{P} der Hydraulikpumpe (10) nicht kleiner als 0,25 × D_{Pmax} und nicht größer als 0,75 × D_{Pmax} ist.

5. Hydraulikgetriebe (6) nach einem der Ansprüche 1 bis 4, ferner umfassend:
eine Hochdruckölleitung (30), die zwischen einer Auslassöffnung der Hydraulikpumpe (10) und einer Einlassöffnung des Hydraulikmotors (20) bereitgestellt ist, um das Drucköl von der Hydraulikpumpe (10) zu dem Hydraulikmotor (20) zu leiten,
eine Niederdruckölleitung (31), die zwischen einer Auslassöffnung des Hydraulikmotors (20) und einer Einlassöffnung der Hydraulikpumpe (10) bereitgestellt ist, um Betriebsöl von dem Hydraulikmotor (20) zu der Hydraulikpumpe (10) zu leiten, wobei das Betriebsöl einen Druck aufweist, der niedriger als der des Drucköls ist,
eine Bypassleitung (34), die die Hochdruckölleitung (30) und die Niederdruckölleitung (31) verbindet,
ein Bypassventil (35), das in der Bypassleitung (34) bereitgestellt ist, um einen Strom des Drucköls zu steuern, das in der Bypassleitung (34) von der Hochdruckölleitung (30) in Richtung der Niederdruckölleitung (31) fließt, und
ein Steuerteil des Bypassventils (35), das dafür ausgelegt ist, das Bypassventil (35) zu steuern, um einen Druck des Drucköls in der Hochdruckölleitung (30) anzupassen,
wobei das Steuerteil des Bypassventils (35) dafür ausgelegt ist, das Bypassventil (35) zumindest dann, wenn die Hydraulikpumpe (10) bei Starten des Hydraulikgetriebes aus einem Bereitschaftszustand heraus gestartet wird, in eine vollständig geöffnete Stellung zu bringen.

6. Hydraulikgetriebe (6) nach Anspruch 5,
wobei ein Bypass-Steuerteil (54) dafür ausgelegt ist, das Bypassventil (35), nachdem eine Drehung der Hydraulikpumpe (10) bei Starten des Hydraulikgetriebes gestartet wird, so zu steuern, dass der Druck in der Hochdruckölleitung (30) einen Druck erreicht, bei dem ein anfängliches Drehmoment erreicht wird, das erforderlich ist, um die Drehung des Hydraulikmotors (20) aus einem Bereitschaftszustand zu starten.

7. Vorrichtung zur Stromerzeugung aus erneuerbarer Energie, umfassend:
mindestens ein Blatt (2),
eine Drehwelle (5), die dafür ausgelegt ist, durch erneuerbare Energie, die durch das mindestens eine Blatt (2) erhalten wird, gedreht zu werden.
das Hydraulikgetriebe nach einem der Ansprüche 1 bis 6,
einen Generator, der dafür ausgelegt ist, durch den Hydraulikmotor (20) angetrieben zu werden.

8. Vorrichtung zur Stromerzeugung aus erneuerbarer Energie nach Anspruch 7,
wobei die Vorrichtung zur Stromerzeugung aus erneuerbarer Energie ein Windkraftgenerator (1) ist, der so ausgelegt ist, dass elektrische Energie durch den Generator (8) unter Verwendung von Windenergie, die das mindestens eine Blatt (2) von dem Wind in Form von erneuerbarer Energie aufnimmt, erzeugt wird.

9. Betriebsverfahren für ein Hydraulikgetriebe (6), das eine Hydraulikpumpe (10) mit variabler Verdrängung, die eine Verdrängung Dp, die innerhalb eines ersten variablen Bereichs variierbar ist, aufweist und dafür ausgelegt ist, durch mechanische Energie, die einer Drehwelle (5) zugeführt wird, angetrieben zu werden, einen Hydraulikmotor (20) mit variabler Verdrängung, der eine Verdrängung D_{M}, die innerhalb eines zweiten variablen Bereichs variierbar ist, aufweist und dafür ausgelegt ist, durch Drucköl von der Hydraulikpumpe (10) angetrieben zu werden, eine Hochdruckölleitung (30), die zwischen einer Auslassöffnung der Hydraulikpumpe (10) und einer Einlassöffnung des Hydraulikmotors (20) bereitgestellt ist, eine Niederdruckölleitung (31), die zwischen einer Auslassöffnung des Hydraulikmotors (20) und einer Einlassöffnung der Hydraulikpumpe (10) bereitgestellt ist, eine Bypassleitung (34), die die Hochdruckölleitung (30) und die Niederdruckölleitung (31) verbindet, und ein Bypassventil (35), das in der Bypassleitung (34) bereitgestellt ist, umfasst,
wobei der erste variable Bereich der Hydraulikpumpe (10) nicht kleiner als D_{Pmin} und nicht größer als D_{Pmax} ist, wobei D_{Pmin} ein Minimalwert ist und D_{Pmax} ein Maximalwert der Verdrängung Dp ist und der Minimalwert D_{Pmin}, der eine Untergrenze des ersten variablen Bereichs ist, größer als Null ist,
wobei der zweite variable Bereich des Hydraulikmotors (20) nicht kleiner als D_{Mmin} und nicht größer als D_{Mmax} ist, wobei D_{Mmin} ein Minimalwert ist und D_{Mmax} ein Maximalwert der Verdrängung D_{M} ist und der Minimalwert D_{Mmin}, der eine Untergrenze des zweiten variablen Bereichs ist, gleich Null ist, und
wobei das Betriebsverfahren den Schritt umfasst:
Steuern, gemäß einer vorgegebenen Korrelation zwischen einer Drehgeschwindigkeit der Hydraulikpumpe (10) und einem Drehmoment der Hydraulikpumpe (10), eines Drucks des Drucköls in der Hochdruckölleitung (30), um das Drehmoment der Hydraulikpumpe (10) auf einen Zielwert gemäß der Drehgeschwindigkeit der Hydraulikpumpe (10) in einem Bereich von weniger als einem Schwellendrehmoment Tₜₕ der Hydraulikpumpe (10), der mindestens durch den Minimalwert D_{Pmin} der Verdrängung Dp und einen Minimalwert des Drucks in der Hochdruckölleitung (30), wenn das Ventil (35) vollständig geschlossen ist, bestimmt wird, anzupassen.

10. Betriebsverfahren für eine Vorrichtung zur Stromerzeugung aus erneuerbarer Energie, die mindestens ein Blatt (2), eine Drehwelle (5), die dafür ausgelegt ist, durch erneuerbare Energie, die durch das mindestens eine Blatt (2) erhalten wird, gedreht zu werden, eine Hydraulikpumpe (10) mit variabler Verdrängung, die eine Verdrängung Dp, die innerhalb eines ersten variablen Bereichs variierbar ist, aufweist und dafür ausgelegt ist, durch mechanische Energie, die der Drehwelle (5) zugeführt wird, angetrieben zu werden, einen Hydraulikmotor (20) mit variabler Verdrängung, der eine Verdrängung D_{M}, die innerhalb eines zweiten variablen Bereichs variierbar ist, aufweist und dafür ausgelegt ist, durch Drucköl von der Hydraulikpumpe (10) angetrieben zu werden, eine Hochdruckölleitung (30), die zwischen einer Auslassöffnung der Hydraulikpumpe (10) und einer Einlassöffnung des Hydraulikmotors (20) bereitgestellt ist, eine Niederdruckölleitung (31), die zwischen einer Auslassöffnung des Hydraulikmotors (20) und einer Einlassöffnung der Hydraulikpumpe (10) bereitgestellt ist, eine Bypassleitung (34), die die Hochdruckölleitung (30) und die Niederdruckölleitung (31) verbindet, und ein Bypassventil (35), das in der Bypassleitung (34) bereitgestellt ist, umfasst,
wobei der erste variable Bereich der Hydraulikpumpe (10) nicht kleiner als D_{Pmin} und nicht größer als D_{Pmax} ist, wobei D_{Pmin} ein Minimalwert ist und D_{Pmax} ein Maximalwert der Verdrängung D_{P} ist und der Minimalwert D_{Pmin}, der eine Untergrenze des ersten variablen Bereichs ist, größer als Null ist,
wobei der zweite variable Bereich des Hydraulikmotors (20) nicht kleiner als D_{Mmin} und nicht größer als D_{Mmax} ist, wobei D_{Mmin} ein Minimalwert ist und D_{Mmax} ein Maximalwert der Verdrängung D_{M} ist und der Minimalwert D_{Mmin}, der eine Untergrenze des zweiten variablen Bereichs ist, gleich Null ist, und
wobei das Betriebsverfahren den Schritt umfasst: Steuern, gemäß einer vorgegebenen Korrelation zwischen einer Drehgeschwindigkeit der Hydraulikpumpe (10) und einem Drehmoment der Hydraulikpumpe (10), eines Drucks des Drucköls in der Hochdruckölleitung (30), um das Drehmoment der Hydraulikpumpe (10) auf einen Zielwert gemäß der Drehgeschwindigkeit der Hydraulikpumpe (10) in einem Bereich von weniger als einem Schwellendrehmoment Tₜₕ der Hydraulikpumpe (10), der mindestens durch den Minimalwert D_{Pmin} der Verdrängung D_{P} und einen Minimalwert des Drucks in der Hochdruckölleitung (30), wenn das Ventil (35) vollständig geschlossen ist, bestimmt wird, anzupassen.

## Revendications

1. Transmission hydraulique (6) comprenant :
une pompe hydraulique (10) du type à cylindrée variable configurée pour être entraînée par de l'énergie mécanique transmise à un arbre de rotation (5) ; et
un moteur hydraulique (20) du type à cylindrée variable configuré pour être entraîné par de l'huile sous pression provenant de la pompe hydraulique (10),
dans laquelle la pompe hydraulique (10) est configurée de sorte qu'une cylindrée D_{P} de la pompe hydraulique (10) soit variable à l'intérieur d'une plage allant de D_{Pmin} à D_{Pmax}, où D_{Pmin} est une valeur minimale et D_{Pmax} est une valeur maximale de la cylindrée D_{P},
dans laquelle le moteur hydraulique (20) est configuré de sorte qu'une cylindrée D_{M} du moteur hydraulique (20) soit variable à l'intérieur d'une plage allant de D_{Mmin} to D_{Mmax}, où D_{Mmin} est une valeur minimale et D_{Mmax} est une valeur maximale de la cylindrée D_{M},
dans laquelle la valeur minimale D_{Mmin} qui est une limite inférieure de la plage variable pour la cylindrée du moteur hydraulique (20) est égale à zéro,
dans laquelle la pompe hydraulique (10) comprend :
une pluralité de pistons (12, 22) ;
une pluralité de cylindres (11, 21) configurés pour guider la pluralité de pistons (12, 22) dans un mouvement de va-et-vient et former une pluralité de chambres de travail (13, 23) avec la pluralité de pistons (12, 22), respectivement ;
au moins un ensemble d'une première soupape haute pression (15a) et d'une première soupape basse pression (16a) prévu pour au moins une première chambre de travail (13a) appartenant à un premier groupe parmi la pluralité de chambres de travail (13) ;
dans laquelle au moins une de la première soupape haute pression (15a) ou de la première soupape basse pression (16a) est constituée par une soupape dont l'ouverture et la fermeture peuvent être commandées de façon active de manière à modifier un état de fonctionnement de l'au moins une première chambre de travail (13a) entre un état actif où il y a un volume de cylindrée et un état non actif où il n'y a pas de volume de cylindrée,
la pompe hydraulique comprend en outre au moins un ensemble d'une deuxième soupape haute pression (15b) et d'une deuxième soupape basse pression (16b) prévu pour au moins une deuxième chambre de travail (13b) appartenant à un deuxième groupe parmi la pluralité de chambres de travail (13), dans laquelle la valeur minimale D_{Pmin}, qui est une limite inférieure de la plage variable pour la cylindrée de la pompe hydraulique (10) est supérieure à zéro,
**caractérisée en ce que** le deuxième groupe est différent du premier groupe,
dans laquelle la deuxième soupape haute pression (15b) et la deuxième soupape basse pression (16b) sont constituées chacune par une soupape dont l'ouverture et la fermeture peuvent être commandées de façon passive de manière à limiter l'au moins une deuxième chambre de travail (13b) à un état actif où il y a un volume de cylindrée, et
dans laquelle la valeur minimale D_{Pmin} de la plage variable pour la cylindrée de la pompe hydraulique (10) est déterminée en fonction du nombre et du volume des deuxièmes chambres de travail (13b).

2. Transmission hydraulique (6) selon la revendication 1, comprenant en outre :
une conduite d'huile haute pression (30) prévue entre un orifice de refoulement de la pompe hydraulique (10) et un orifice d'admission du moteur hydraulique (20) pour envoyer l'huile sous pression de la pompe hydraulique (10) au moteur hydraulique (20) ;
une conduite d'huile basse pression prévue entre un orifice de refoulement du moteur hydraulique (20) et un orifice d'admission de la pompe hydraulique (10) pour envoyer de l'huile de fonctionnement du moteur hydraulique (20) à la pompe hydraulique (10), ladite huile de fonctionnement ayant une pression inférieure à celle de ladite huile sous pression ;
une conduite de dérivation (34) reliant la conduite d'huile haute pression (30) et la conduite d'huile basse pression ;
une soupape de dérivation (35) prévue dans la conduite de dérivation (34) ; et
un élément de commande de la soupape de dérivation (35) configuré pour commander la soupape de dérivation (35) de manière à régler une pression de l'huile sous pression dans la conduite d'huile haute pression (30),
dans laquelle l'élément de commande de la soupape de dérivation (35) est configuré pour commander la pression de l'huile sous pression dans la conduite d'huile haute pression (30) conformément à une corrélation prescrite entre une vitesse de rotation de la pompe hydraulique (10) et un couple de la pompe hydraulique (10) de manière à régler le couple de la pompe hydraulique (10) sur une valeur cible en fonction de la vitesse de rotation de la pompe hydraulique (10) dans une plage inférieure à un couple seuil Tₜₕ de la pompe hydraulique (10) qui est déterminé par au moins la valeur minimale D_{Pmin} de la cylindrée D_{P} et une valeur minimale de la pression dans la conduite d'huile haute pression (30) lorsque la soupape de dérivation (35) est complètement fermée.

3. Transmission hydraulique (6) selon la revendication 2, comprenant en outre :
un élément de commande de la pompe (52) configuré pour commander la pompe hydraulique (10) pour régler la cylindrée D_{P} de la pompe hydraulique (10),
dans laquelle l'élément de commande de la pompe (52) est configuré pour commander la cylindrée D_{P} de la pompe hydraulique (10) à l'intérieur de la plage de D_{Pmin} à D_{Pmax} de manière à régler le couple de la pompe hydraulique (10) sur la valeur cible en fonction de la vitesse de rotation de la pompe hydraulique (10) conformément à la corrélation prescrite entre la vitesse de rotation de la pompe hydraulique et le couple de la pompe hydraulique (10), dans une plage supérieure ou égale au couple seuil Tₜₕ.

4. Transmission hydraulique (6) selon l'une quelconque des revendications 1 à 3,
dans laquelle la valeur minimale D_{Pmin} de la cylindrée D_{P} de la pompe hydraulique (10) est supérieure ou égale à 0,25 x D_{Pmax} et inférieure ou égale à 0,75 x D_{Pmax}.

5. Transmission hydraulique (6) selon l'une quelconque des revendications 1 à 4, comprenant en outre :
une conduite d'huile haute pression (30) prévue entre un orifice de refoulement de la pompe hydraulique (10) et un orifice d'admission du moteur hydraulique (20) pour envoyer l'huile sous pression de la pompe hydraulique (10) au moteur hydraulique (20) ;
une conduite d'huile basse pression (31) prévue entre un orifice de refoulement du moteur hydraulique (20) et un orifice d'admission de la pompe hydraulique (10) pour envoyer de l'huile de fonctionnement du moteur hydraulique (20) à la pompe hydraulique (10), ladite huile de fonctionnement ayant une pression inférieure à celle de ladite huile sous pression ;
une conduite de dérivation (34) reliant la conduite d'huile haute pression (30) et la conduite d'huile basse pression (31) ;
une soupape de dérivation (35) prévue dans la conduite de dérivation (34) pour réguler un débit de l'huile sous pression s'écoulant dans la conduite de dérivation (34) de la conduite d'huile haute pression (30) vers la conduite d'huile basse pression (31) ; et
un élément de commande de la soupape de dérivation (35) configuré pour commander la soupape de dérivation (35) de manière à régler une pression de l'huile sous pression dans la conduite d'huile haute pression (30),
dans laquelle l'élément de commande de la soupape de dérivation (35) est configuré pour commander la soupape de dérivation (35) vers une position complètement ouverte au moins lorsque la pompe hydraulique (10) est mise en route à partir d'un état de veille au démarrage de la transmission hydraulique.

6. Transmission hydraulique (6) selon la revendication 5,
dans laquelle un élément de commande de dérivation (54) est configuré pour commander la soupape de dérivation (35) une fois que la rotation de la pompe hydraulique (10) a commencé au démarrage de la transmission hydraulique afin que la pression dans la conduite d'huile haute pression (30) atteigne une pression à laquelle un couple initial nécessaire pour démarrer la rotation du moteur hydraulique (20) à partir d'un état de veille est obtenu.

7. Appareil de production d'énergie du type à énergie renouvelable comprenant :
au moins une pale (2) ;
un arbre de rotation (5) configuré pour tourner grâce à de l'énergie renouvelable reçue par l'au moins une pale (2) ;
la transmission hydraulique selon l'une quelconque des revendications 1 à 6 ;
un générateur configuré pour être entraîné par le moteur hydraulique (20).

8. Appareil de production d'énergie du type à énergie renouvelable selon la revendication 7,
dans lequel l'appareil de production d'énergie du type à énergie renouvelable est un générateur éolien (1) qui est configuré de sorte que de l'énergie électrique soit produite par le générateur (8) au moyen d'une énergie éolienne que reçoit l'au moins une pale (2) grâce au vent sous forme d'énergie renouvelable.

9. Procédé de fonctionnement d'une transmission hydraulique (6) qui comprend une pompe hydraulique (10) du type à cylindrée variable ayant une cylindrée D_{P} qui est variable à l'intérieur d'une première plage variable et configurée pour être entraînée par de l'énergie mécanique transmise à un arbre de rotation (5), un moteur hydraulique (20) du type à cylindrée variable ayant une cylindrée D_{M} qui est variable à l'intérieur d'une seconde plage variable et configuré pour être entraîné par de l'huile sous pression provenant de la pompe hydraulique (10), une conduite d'huile haute pression (30) prévue entre un orifice de refoulement de la pompe hydraulique (10) et un orifice d'admission du moteur hydraulique (20), une conduite d'huile basse pression (31) prévue entre un orifice de refoulement du moteur hydraulique (20) et un orifice d'admission de la pompe hydraulique (10), une conduite de dérivation (34) reliant la conduite d'huile haute pression (30) et la conduite d'huile basse pression (31), et une soupape de dérivation (35) prévue dans la conduite de dérivation (34),
dans lequel la première plage variable de la pompe hydraulique (10) est supérieure ou égale à D_{Pmin} et inférieure ou égale à D_{Pmax} où D_{Pmin} est une valeur minimale et D_{Pmax} est une valeur maximale de la cylindrée D_{P}, et la valeur minimale D_{Pmin} étant une limite inférieure de la première plage variable est supérieure à zéro,
dans lequel la seconde plage variable du moteur hydraulique (20) est supérieure ou égale à D_{Mmin} et inférieure ou égale à D_{Mmax} où D_{Mmin} est une valeur minimale et D_{Mmax} est une valeur maximale de la cylindrée DM, et la valeur minimale D_{Mmin} étant une limite inférieure de la seconde plage variable est égale à zéro, et
dans lequel le procédé de fonctionnement comprend l'étape de :
commande, conformément à une corrélation prescrite entre une vitesse de rotation de la pompe hydraulique (10) et un couple de la pompe hydraulique (10), d'une pression de l'huile sous pression dans la conduite d'huile haute pression (30) de manière à régler le couple de la pompe hydraulique (10) sur une valeur cible en fonction de la vitesse de rotation de la pompe hydraulique (10) dans une plage inférieure à un couple seuil Tₜₕ de la pompe hydraulique (10) qui est déterminé par au moins la valeur minimale D_{Pmin} de la cylindrée D_{P} et une valeur minimale de la pression dans la conduite d'huile haute pression (30) lorsque la soupape de dérivation (35) est complètement fermée.

10. Procédé de fonctionnement d'un appareil de production d'énergie du type à énergie renouvelable qui comprend au moins une pale (2), un arbre de rotation (5) configuré pour tourner grâce à de l'énergie renouvelable reçue par l'au moins une pale (2), une pompe hydraulique (10) du type à cylindrée variable ayant une cylindrée D_{P} qui est variable à l'intérieur d'une première plage variable et configurée pour être entraînée par de l'énergie mécanique transmise à l'arbre de rotation (5), un moteur hydraulique (20) du type à cylindrée variable ayant une cylindrée D_{M} qui est variable à l'intérieur d'une seconde plage variable et configuré pour être entraîné par de l'huile sous pression provenant de la pompe hydraulique (10), une conduite d'huile haute pression (30) prévue entre un orifice de refoulement de la pompe hydraulique (10) et un orifice d'admission du moteur hydraulique (20), une conduite d'huile basse pression (31) prévue entre un orifice de refoulement du moteur hydraulique (20) et un orifice d'admission de la pompe hydraulique (10), une conduite de dérivation (34) reliant la conduite d'huile haute pression (30) et la conduite d'huile basse pression (31), et une soupape de dérivation (35) prévue dans la conduite de dérivation (34),
dans lequel la première plage variable de la pompe hydraulique (10) est supérieure ou égale à D_{Pmin} et inférieure ou égale à D_{Pmax} où D_{Pmin} est une valeur minimale et D_{Pmax} est une valeur maximale de la cylindrée D_{P}, et la valeur minimale D_{Pmin} étant une limite inférieure de la première plage variable est supérieure à zéro,
dans lequel la seconde plage variable du moteur hydraulique (20) est supérieure ou égale à D_{Mmin} et inférieure ou égale à D_{Mmax} où D_{Mmin} est une valeur minimale et D_{Mmax} est une valeur maximale de la cylindrée D_{M}, et la valeur minimale D_{Mmin} étant une limite inférieure de la seconde plage variable est égale à zéro, et
dans lequel le procédé de fonctionnement comprend l'étape consistant à : commander, conformément à une corrélation prescrite entre une vitesse de rotation de la pompe hydraulique (10) et un couple de la pompe hydraulique (10), une pression de l'huile sous pression dans la conduite d'huile haute pression (30) de manière à régler le couple de la pompe hydraulique (10) sur une valeur cible en fonction de la vitesse de rotation de la pompe hydraulique (10) dans une plage inférieure à un couple seuil Tₜₕ de la pompe hydraulique (10) qui est déterminé par au moins la valeur minimale D_{Pmin} de la cylindrée D_{P} et une valeur minimale de la pression dans la conduite d'huile haute pression (30) lorsque la soupape de dérivation (35) est complètement fermée.
